(19) Europäisches Patentamt
European Patent Office
Office européen des brevets

(11) EP 3 546 510 A1

(12) **EUROPÄISCHE PATENTANMELDUNG**

(43) Veröffentlichungstag:
**02.10.2019 Patentblatt 2019/40**

(51) Int Cl.:
***C08K 5/5313*** *(2006.01)* ***C08K 5/5317*** *(2006.01)*
***C08K 7/06*** *(2006.01)*

(21) Anmeldenummer: **18163857.8**

(22) Anmeldetag: **26.03.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **LANXESS Deutschland GmbH**
**50569 Köln (DE)**

(72) Erfinder: **Die Erfindernennung liegt noch nicht vor**

(54) **POLYAMIDZUSAMMENSETZUNGEN**

(57) Die vorliegende Erfindung betrifft Zusammensetzungen auf Basis von Polyamid 6 und/oder Polyamid 66 enthaltend Kohlenstofffasern, mindestens ein Aluminiumsalz der Phosphonsäure und ein oder mehrere organische Phosphinsäuresalze und/oder ein oder mehrere Diphosphinsäuresalze.

EP 3 546 510 A1

## Beschreibung

Die vorliegende Erfindung betrifft Zusammensetzungen auf Basis von Polyamid 6 und/oder Polyamid 66 enthaltend Kohlenstofffasern, mindestens ein Aluminiumsalz der Phosphonsäure und ein oder mehrere organische Phosphinsäuresalze und/oder ein oder mehrere Diphosphinsäuresalze.

## Stand der Technik

Polyamide sind aufgrund ihrer guten mechanischen Stabilität, ihrer chemischen Beständigkeit und der guten Verarbeitbarkeit, gerade auch im Bereich von Bauteilen für Kraftfahrzeuge, ein wichtiger thermoplastischer Werkstoff. So bilden insbesondere glasfaserverstärkte Polyamide seit vielen Jahren einen wichtigen Bestandteil bei anspruchsvollen Kraftfahrzeuganwendungen. Während über viele Jahre der Verbrennungsmotor das dominierende Antriebskonzept darstellte, ergeben sich im Zuge der Suche nach alternativen Antriebskonzepten auch neue Anforderungen hinsichtlich der Materialauswahl. Eine wesentliche Rolle spielt dabei die Elektromobilität, bei welcher der Verbrennungsmotor teilweise (Hybrid-Fahrzeug) oder vollständig (Elektromobil) durch einen oder mehrere Elektromotoren ersetzt wird, die ihre elektrische Energie typischerweise aus Batterien beziehen. Je nach Reichweite, die mit einer Batterieladung erzielt werden soll, nehmen die Batteriesysteme dabei einen bedeutenden Anteil am Gesamtgewicht des Fahrzeugs ein. So benötigen nach **https://de.wikipedia.org/wiki/Elektroauto** Elektro-Kleinwagen für eine Reichweite um 150km bereits Akkumulatoren mit ca. 200kg Masse. Dies erfordert einerseits neue Technologie- und Materialkonzepte für die sichere Halterung derartiger Massen in Fahrzeugen, gleichzeitig und andererseits aber auch einen stärkeren Fokus auf Materialien mit geringerer Dichte, um so die zusätzliche Masse der Batterie zumindest teilweise kompensieren zu können und insgesamt den Energieverbrauch des Fahrzeugs zu senken. Wegen der hohen elektrischen Spannungen und Ströme in Batteriesystem und/oder im elektrischen Antriebsstrang kommen außerdem - insbesondere im Fehlerfall - Risiken durch schnell steigende Temperaturen, Funken oder Lichtbögen hinzu, was zusätzliche noch erhöhte Anforderungen an die Brandsicherheit solcher Fahrzeugkomponenten abverlangt. Dies führt in Summe dazu, dass die eingangs erwähnten, in Autos mit Verbrennungsmotoren etablierten glasfaserverstärkten Polyamide, unter Berücksichtigung der zusätzlichen Anforderungen aus sehr hoher Steifigkeit bei sehr hoher Festigkeit bei gleichzeitig geringer Dichte und hoher Flammwidrigkeit an ihre Grenzen stoßen. Dies umso mehr, wenn man auch noch die in der Automobilbranche typischen weiteren Anforderungen, insbesondere die Beständigkeit bei wechselnden Temperaturen und feuchtwarmem Klima, mit einbezieht.

Der Einsatz von Kohlenstofffasern in Polyamid 6 (PA 6) und Polyamid 66 (PA 66) ist literaturbekannt. (Becker, G. / Braun, D. (Hrsg.) (1998): Kunststoff-Handbuch, 3. Technische Thermoplaste; 4. Polyamide, München; Wien: Hanser, Neuausg. S.106). Allerdings findet der Fachmann dort keine Anleitung, wie die speziellen Anforderungen einer erhöhten Flammwidrigkeit technisch gelöst werden können. Weil aber Kohlenstofffasern aufgrund ihres Kohlenstoffgehaltes, anders als etwa Mineralfasern oder Glasfasern, im Falle einer Verbrennung eine zusätzliche Wärmemenge beisteuern, wobei in der Literatur ein Brennwert von Kohlenstoff von 32,8 MJ/kg genannt wird (**https://de.wikipedia.org/wiki/Heizwert**), ist die Flammwidrigkeit von im Kraftfahrzeugbau einzusetzenden kohlenstofffaserverstärkten PA 6 bzw. PA 66 Erzeugnissen von erheblicher Bedeutung.

Zur Verbesserung der Flammwidrigkeit werden Polyamide häufig mit Flammschutzmitteln ausgerüstet. Die dafür infrage kommenden halogenhaltigen Flammschutzmittel werden dabei in jüngerer Zeit aus technischen Gründen aufgrund von Vorbehalten in der Öffentlichkeit zunehmend durch halogenfreie Alternativen, zum Beispiel auf Basis von organischen Phosphorverbindungen wie z.B. organisch substituierte Metallphosphinate ersetzt (EP 0 792 912 A2). Dabei werden die organisch substituierten Metallphosphinate häufig in Kombination mit Flammschutzmittelsynergisten, z.B. auf Basis stickstoffhaltiger Flammschutzmittel, oder mit weiteren Hilfsstoffen, wie z.B. Metallboraten, insbesondere Zinkborate (WO 2006/ 029711 A1) eingesetzt.

EP 3 034 553 A1 lehrt thermostabilisierte Polyamidzusammensetzungen enthaltend Verstärkungsstoffe, darunter erwähnt auch Kohlenstofffasern, ferner organisch substituierte Metallphosphinate, mindestens ein Aluminiumsalz der Phosphonsäure und mindestens einen mehrwertigen Alkohol, beispielsweise Dipentaerythritol, wobei Zinkborate nach Möglichkeit vermieden werden können, ohne dabei aber auf eine mögliche speziellere Problematik bei der Flammschutzausrüstung von Kohlenstofffaserverstärkten Polyamiden einzugehen. Auch gibt EP 3 034 553 A1 keine Hinweise zum Verhalten und zur Beständigkeit der darin beschriebenen Zusammensetzungen bei wechselnden Temperaturen und feuchtwarmem Klima.

Aufgabe der vorliegenden Erfindung war es daher, speziell mit Blick auf Anwendungen und Erzeugnisse für die Elektromobilität, insbesondere im Bereich des Batteriesystems, halogenfreie flammgeschützte Polyamidzusammensetzungen mit sehr hoher Biegesteifigkeit bereitzustellen, die auch in feuchtwarmem Klima eine hohe Beständigkeit und eine geringe Neigung hinsichtlich Oberflächenveränderungen aufweisen und dabei nach Möglichkeit keinen Einsatz von Zinkboraten erfordern.

Es wurde nun überraschend gefunden, dass Zusammensetzungen und daraus herzustellende Erzeugnisse

auf Basis von Kohlenstofffasern enthaltendem PA 6 oder PA 66 und mindestens einem Aluminiumsalz der Phosphonsäure sowie mindestens einem organischen Metallphosphinat eine deutlich verbesserte Biegesteifigkeit und eine geringe Neigung zu Oberflächenveränderung in feuchtwarmem Klima aufweisen, ohne dass dabei die Flammwidrigkeit in der UL94-Prüfung negativ beeinträchtigt wird und ohne dass dabei ein Einsatz von Zinkborat erforderlich ist.

Als Maß für die Oberflächenveränderung in feuchtwarmem Klima gilt dabei die Verfärbung einer ursprünglich schwarzen Oberfläche nach 14 Tage Lagerung bei 85°C und 85% Luftfeuchtigkeit, wobei die Verfärbung nach dem Graumaßstab gemäß ISO 105-A02 beurteilt wird; siehe: **https://www.carl-von-gehlen.de/graumassstaebe.html.**

**Erfindungsgegenstand**

Gegenstand der Erfindung sind Zusammensetzungen enthaltend

A) Polyamid 6 und/oder Polyamid 66, jeweils mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,
B) Kohlenstofffasern,
C) mindestens ein Aluminiumsalz der Phosphonsäure, und
D) ein oder mehrere organische Phosphinsäuresalze der Formel (I) und/oder ein oder mehrere Diphosphinsäuresalze der Formel (II) und/oder deren Polymere,

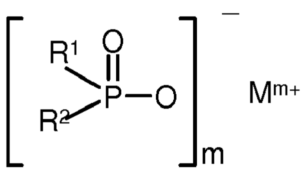 (I) 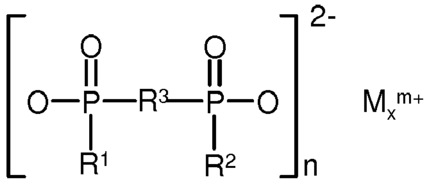 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht, m für eine ganze Zahl von 1 bis 4 steht;
n für eine ganze Zahl von 1 bis 3 steht,
x für 1 und 2 steht,

wobei n, x und m in Formel (II) gleichzeitig nur solche ganzen Zahlen annehmen können, dass das Diphosphinsäuresalz der Formel (II) als Ganzes ungeladen ist.

Die Erfindung betrifft aber auch Erzeugnisse, vorzugsweise Batteriesystemkomponenten, basierend auf Zusammensetzungen enthaltend

A) Polyamid 6 und/oder Polyamid 66, jeweils mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,
B) Kohlenstofffasern,
C) mindestens ein Aluminiumsalz der Phosphonsäure, und
D) ein oder mehrere organische Phosphinsäuresalze der Formel (I) und/oder ein oder mehrere Diphosphinsäuresalze der Formel (II) und/oder deren Polymere,

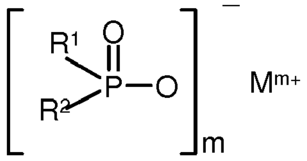 (I) 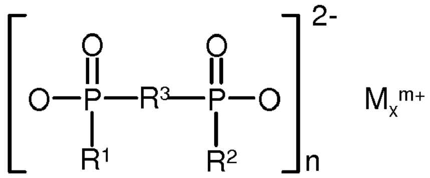 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl von 1 bis 4 steht;
n für eine ganze Zahl von 1 bis 3 steht,
x für 1 und 2 steht,

wobei n, x und m in Formel (II) gleichzeitig nur solche ganzen Zahlen annehmen können, dass das Diphosphinsäuresalz der Formel (II) als Ganzes ungeladen ist.

Bevorzugte Erzeugnisse sind solche für den Einsatz im elektrischen Antriebsstrang und/oder Batteriesystem von Fahrzeugen mit elektrischem Antrieb (Hybrid- oder Elektrofahrzeuge), besonders bevorzugt im Bereich des Batteriesystems. Insbesondere bevorzugte Batteriesystemkomponenten im Sinne der vorliegenden Erfindung sind Einfassung, Befestigung und Aufhängung eines Batteriesystems oder einzelne Komponenten eines Batteriesystems, vorzugsweise Zellmodule, Kühlvorrichtungen oder Batteriemanagementsysteme.

Zur Klarstellung sei angemerkt, dass vom Rahmen der vorliegenden Erfindung alle nachfolgend aufgeführten allgemeinen oder in Vorzugsbereichen genannten Definitionen und Parameter in beliebigen Kombinationen umfasst sind.

Die Zubereitung der erfindungsgemäßen Zusammensetzungen für eine weitere Nutzung erfolgt durch Mischen der als Edukte einzusetzenden Komponenten A) bis D) in wenigstens einem Mischwerkzeug. Hierdurch werden als Zwischenprodukte, auf den erfindungsgemäßen Zusammensetzungen basierende, Formmassen erhalten. Diese Formmassen können entweder ausschließlich aus den Komponenten A) bis D) bestehen, oder aber zusätzlich zu den Komponenten A) bis D) noch weitere Komponenten enthalten.

Zur Messung der Biegesteifigkeit sei auf C.Jaroschek, Zeitschrift Kunststofftechnik 8 (2012) 5, 516-524 verwiesen, die im Rahmen der vorliegenden Erfindung an spritzfrischen Probekörpern der Abmessung 80 mm • 10 mm • 4 mm nach ISO 178-A bestimmt wird, wobei im Rahmen der vorliegenden Erfindung der Biegemodul als Maß für die Biegesteifigkeit betrachtet wird.

"Alkyl" bezeichnet im Rahmen der vorliegenden Erfindung, insbesondere in den Formeln (I) und (II), eine geradkettige oder verzweigte gesättigte Kohlenwasserstoffgruppe. Wird beispielsweise eine Alkylgruppe oder Polyalkylengruppe mit 1 bis 4 Kohlenstoffatomen eingesetzt, kann diese als eine "Niederalkylgruppe" bezeichnet werden und vorzugsweise Methyl (Me), Ethyl (Et), Propyl, insbesondere n-Propyl und iso-Propyl, Butyl, insbesondere n-Butyl, iso-Butyl, sec-Butyl, tert.-Butyl, umfassen.

Eine Arylgruppe, abgekürzt Ar oder Aryl, ist ein organisch-chemischer Rest mit einem aromatischen Grundgerüst. Aryl ist die allgemeine Bezeichnung für eine einwertige Atomgruppe, die sich von aromatischen Kohlenwasserstoffen durch Entzug eines an den Ring gebundenen Wasserstoffatoms ableitet. Erfindungsgemäß bevorzugte Arylreste leiten sich vom Benzol ($C_6H_6$) ab. Besonders bevorzugte Arylreste sind Phenyl, 1-Naphthyl, 2-Naphthyl, 9-Anthryl und 9-Phenantryl. Ganz besonders bevorzugt ist Phenyl (Ph) oder (-$C_6H_5$).

Die im Rahmen dieser Anmeldung genannten Normen beziehen sich auf die zum Anmeldetag dieser Erfindung geltenden Fassung.

## Bevorzugte Ausführungsformen der Erfindung

In bevorzugter Ausführung betrifft die Erfindung Zusammensetzungen bzw. Erzeugnisse basierend auf Zusammensetzungen enthaltend

A) auf 100 Massenanteile Polyamid 6 und/oder Polyamid 66, jeweils mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,
B) 2 bis 120 Massenanteile bevorzugt 9 bis 90 Massenanteile, besonders 12 bis 70 Massenanteile Kohlenstofffasern,
C) 3 bis 30 Massenanteile, bevorzugt 5 bis 20 Massenanteile, besonders bevorzugt 7 bis 15 Massenanteile mindestens eines Aluminiumsalzes der Phosphonsäure, und
D) 8 bis 80 Massenanteile, bevorzugt 10 bis 55 Massenanteile, besonders bevorzugt 8 bis 45 Massenanteile eines oder mehrerer organischer Phosphinsäuresalze der Formel (I) und/oder eines oder mehrerer Diphosphinsäuresalze der Formel (II) und/oder deren Polymere,

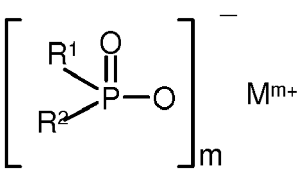 (I) 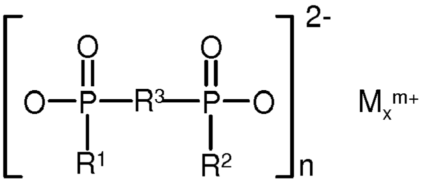 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,
$R^3$ für lineares oder verzweigtes $C_1$-$C_{l0}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl von 1 bis 4 steht;
n für eine ganze Zahl von 1 bis 3 steht,
x für 1 und 2 steht,

wobei n, x und m in Formel (II) gleichzeitig nur solche ganzen Zahlen annehmen können, dass das Diphosphinsäuresalz der Formel (II) als Ganzes ungeladen ist.

In einer bevorzugten Ausführungsform enthalten die Zusammensetzungen bzw. Erzeugnisse zusätzlich zu den Komponenten A), B), C) und D) noch E) wenigstens einen Thermostabilisator aus der Gruppe der **sterisch gehinderten Phenole,** bevorzugt zu 0,02 bis 4 Massenanteilen, besonders bevorzugt zu 0,1 bis 2 Massenanteilen, ganz besonders bevorzugt zu 0,2 bis 1,5 Massenanteilen, jeweils bezogen auf 100 Massenanteile der Komponente A).

In einer weiteren bevorzugten Ausführungsform enthalten die Zusammensetzungen zusätzlich zu den Komponenten A) bis E) oder anstelle von E) noch F) **Glasfasern,** bevorzugt zu 10 bis 150 Massenanteilen, besonders bevorzugt zu 15 bis 80 Massenanteilen, ganz besonders bevorzugt zu 20 bis 50 Massenanteilen, jeweils bezogen auf 100 Massenanteile der Komponente A).

In einer weiteren bevorzugten Ausführungsform enthalten die Zusammensetzungen zusätzlich zu den Komponenten A) bis F) oder anstelle von E) und/oder F) noch G) wenigstens einen von den Komponenten B) und F) **verschiedenen Füllstoff oder Verstärkungsstoff,** bevorzugt zu 1 bis 150 Massenanteilen, besonders bevorzugt zu 5 bis 80 Massenanteilen, ganz besonders bevorzugt zu 10 bis 50 Massenanteilen, jeweils bezogen auf 100 Massenanteile der Komponente A).

In einer weiteren bevorzugten Ausführungsform enthalten die Zusammensetzungen zusätzlich zu den Komponenten A) bis G) oder anstelle von E) und/oder F) und/oder G) noch H) wenigstens eine weiteres **von den Komponenten B) bis G) unterschiedliches Additiv,** bevorzugt zu 0,01 bis 80 Massenanteile, besonders bevorzugt zu 0,05 bis 50 Massenanteile, ganz besonders bevorzugt zu 0,1 bis 30 Massenanteile, jeweils bezogen auf 100 Massenanteile der Komponente A).

**Komponente A)**

Als Komponente A) enthalten die Zusammensetzungen PA 6 [ CAS Nr. 25038-54-4 ] und/oder PA 66 [CAS Nr. 32131-17-2], jeweils mit einer nach ISO 307 in 0,5 gew.-%iger Lösung in 96 gew.-%iger Schwefelsäure bei 25 °C zu bestimmenden Viskositätszahl im Bereich von 80 bis 180 ml/g. Copolyamide auf Basis von PA 6 und/oder PA 66 werden vom Gegenstand der vorliegenden Erfindung mit umfasst.

Die im Rahmen der vorliegenden Anmeldung benutzte Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl angegeben, wie im Falle des PA6, so bedeutet dies, dass von einer $\alpha,\omega$-Aminocarbonsäure bzw. von dem davon abgeleiteten Lactam, im Falle des PA 6 also dem $\varepsilon$-Caprolactam, ausgegangen worden ist; im Übrigen sei verwiesen auf H. Domininghaus, Die Kunststoffe und ihre Eigenschaften, Seiten 272 ff., VDI-Verlag, 1976.

Bevorzugt weist das als Komponente A) einzusetzende Polyamid 6 eine nach ISO 307 in 0,5 gew.-%iger Lösung in 96 gew.-%iger Schwefelsäure bei 25 °C zu bestimmende Viskositätszahl im Bereich von 85 bis 160 ml/g auf, ganz besonders bevorzugt eine Viskositätszahl im Bereich von 90 bis 140 ml/g, insbesondere bevorzugt im Bereich von 95 bis 115 ml/g.

Das alternativ als Komponente A) einzusetzende Polyamid 66 weist vorzugsweise eine nach ISO 307 in 0,5 gew.-%iger Lösung in 96 gew.-%iger Schwefelsäure bei 25 °C zu bestimmende Viskositätszahl im Bereich von 90 bis

170 ml/g, besonders bevorzugt eine Viskositätszahl im Bereich von 95 bis 160 ml/g und insbesondere bevorzugt eine Viskositätszahl im Bereich von 100 bis 135 ml/g auf.

Aus Viskositätsmessungen in Lösung bestimmt man den K-Wert, ein Molekülparameter mit dem die Fließeigenschaften von Kunststoffen gekennzeichnet werden können. Vereinfacht gilt: [η] = 2,303 × (75 $k^2$ + k) mit K-Wert = 1000 k und [η] = Staudinger Viskosität. Die Viskositätszahl VN in Milliliter je Gramm kann daraus ohne komplizierte Umrechnung nach ISO307 ermittelt werden.

$$VN = \left(\frac{\eta}{\eta_0} - 1\right)\frac{1}{c}$$

Siehe: **http://www.mhaeberl.de/KUT/3Kunststoffschmelze.htm.** Für die Praxis existieren Umrechnungstabellen vom K-Wert in die Viskositätszahl VN.

Unter thermoplastischen Polyamiden werden in Anlehnung an Hans Domininghaus in "Die Kunststoffe und ihre Eigenschaften", 5. Auflage (1998), S. 14**,** Polyamide verstanden, deren Molekülketten keine oder auch mehr oder weniger lange und in der Anzahl unterschiedliche Seitenverzweigungen aufweisen, die in der Wärme erweichen und nahezu beliebig formbar sind. Bei den als Komponente A) einzusetzenden Polyamiden PA 6 bzw. PA 66 handelt es sich um teilkristalline Polyamide. Teilkristalline Polyamide besitzen gemäß DE 10 2011 084 519 A1 eine Schmelzenthalpie im Bereich von 4 bis 25 J/g, gemessen mit der DSC-Methode gemäß ISO 11357 beim 2. Aufheizen und Integration des Schmelzpeaks. Im Gegensatz dazu besitzen amorphe Polyamide eine Schmelzenthalpie von weniger als 4 J/g, gemessen mit der DSC-Methode gemäß ISO 11357 beim 2. Aufheizen und Integration des Schmelzpeaks.

Die als Komponente A) einzusetzenden Polyamide PA 6 bzw. PA 66 können allein oder in Kombination mit Verarbeitungshilfsmitteln, Stabilisatoren oder auch polymeren Legierungspartnern, bevorzugt Elastomeren, zu Werkstoffen mit speziell eingestellten Eigenschaftskombinationen eingesetzt werden. Geeignet sind auch Blends mit Anteilen anderer Polymere, bevorzugt von Polyethylen, Polypropylen, Acrylnitril-Butadien-StyrolCopolymerisat (ABS), wobei ggf. ein oder mehrere Kompatibilisatoren eingesetzt werden können. Die Eigenschaften des PA 6 bzw. PA 66 lassen sich durch Zusatz von Elastomeren verbessern, z. B. im Hinblick auf die Schlagzähigkeit. Die Vielzahl der Kombinationsmöglichkeiten ermöglicht eine sehr große Zahl von Produkten mit unterschiedlichsten Eigenschaften.

Das als Komponente A) einzusetzende Polyamid 6 ist erhältlich aus ε-Caprolactam. Das als Komponente A) einzusetzende Polyamid 66 ist erhältlich aus Hexamethylendiamin und Adipinsäure.

Bevorzugt sind weiterhin die meisten auf PA 6, PA 66 bzw. auf deren Copolyamiden basierende Compounds, bei denen auf eine Polyamidgruppe in der Polymerkette 3 bis 11 Methylengruppen, besonders bevorzugt 4 bis 6 Methylengruppen kommen.

Erfindungsgemäß als Komponente A) einzusetzendes Polyamid 6 ist beispielswiese als Durethan® B24 bei der Lanxess Deutschland GmbH, Köln, und erfindungsgemäß als Komponente A) einzusetzendes Polyamid 66 als Ultramid® A24E01 bei der BASF SE, Ludwigshafen, erhältlich.

**Komponente B)**

Als Komponente B) enthalten die Zusammensetzungen Kohlenstofffasern, auch Carbonfasern oder Kohlefasern genannt. Bevorzugt ist Komponente B) dabei wie folgt ausgebildet:
Eine erste Ausführungsform ist dadurch gekennzeichnet, dass die Komponente B) vorzugsweise als geschnittene Faser oder als geschnittenes oder endloses Faserbündel eingesetzt wird.

Eine weitere bevorzugte Ausführungsform ist dadurch gekennzeichnet, dass als Komponente B) einzusetzende Kohlenstofffasern eine mittlere Länge im Bereich von 0,1 bis 50 mm, bevorzugt im Bereich von 2 bis 26 mm, besonderes bevorzugt im Bereich von 4 bis 8 mm aufweisen, wobei im Rahmen der vorliegenden Erfindung zur Bestimmung der Länge ein USB-Mikroskop mit Kalibrierung verwendet wird, insbesondere Dino-Lite Edge Digital Microscope AM7915MZT mit Dino Capture 2.0 Software; Dino-Lite Europe/IDCP B.V., Naarden, Niederlande.

Zusätzlich oder alternativ zeichnen sich erfindungsgemäß als Komponente B) vorzugsweise einzusetzende Kohlenstofffasern durch einen mit Elektronenmikroskop zu bestimmenden mittleren Durchmesser im Bereich von 5 bis 40 μm, besonders bevorzugt im Bereich von 5 bis 10 μm, aus.

Alle Angaben beziehen sich dabei jeweils auf das Ausgangsmaterial der Komponente B), unmittelbar vor dem Einarbeiten in eine bzw. zu einer Formmasse. Durch die Einarbeitung in bzw. zu eine(r) Formmasse und/oder durch nachgelagerte Verarbeitungsprozesse, wie dem Spritzgussprozess, kann es zu einer Verkürzung der Kohlenstofffasern kommen.

Eine weitere bevorzugte Ausführungsform ist dadurch gekennzeichnet, dass die als Komponente B) einzusetzenden Kohlenstofffasern in einem Pyrolyseprozess ausgehend von Cellulose-basierten Fasern, Pech oder Polyacrylnitril (PAN) hergestellt werden, wobei erfindungsgemäß solche hergestellt aus PAN ganz besonders bevorzugt sind.

Die als Komponente B) einzusetzenden Kohlenstofffasern können aus mehreren hundert bis hundertausend Einzelfilamenten mit vorzugsweise einem Filamentdurchmesser im Bereich von 5 bis 10 $\mu$m, zu bestimmen mit einem Elektronenmikroskop, ausgebildet sein. Laut **https://de.wikipedia.org/wiki/Kohlenstofffaser** unterscheidet man dabei Multifilamentgarne mit 1.000 bis 24.000 Einzelfasern und HT-Typen (High Tensity) mit 120.000 bis 400.000 Einzelfasern.

Die als Komponente B) einzusetzenden Kohlenstofffasern können in einer weiteren bevorzugten Ausführungsform an ihrer Oberfläche mit einer Schlichte oder einem Haftvermittler bzw. Haftvermittlersystem versehen sein, um deren Verarbeitung zu verbessern oder erst zu ermöglichen, sowie eine gute Verträglichkeit zu den als Komponente A) einzusetzenden Polyamiden zu bewirken.

Die als Komponente B) einzusetzenden Kohlenstofffasern können in einer weiteren bevorzugten Ausführungsform - sofern es der Bedarf unter Berücksichtigung der damit verbundenen Nachteile einer Dichtezunahme erfordert - mit einer metallischen Beschichtung versehen sein, um so eine Verbesserung der elektrischen Leitfähigkeit im fertigen Erzeugnis zu erzielen, insbesondere bei Anforderungen an eine erhöhte elektromagnetische Abschirmung. Hierbei ist die Verwendung von Nickel als Metall besonders bevorzugt. Siehe hierzu beispielsweise EP 2 788 542B1 und die darin zitierten Literaturstellen.

Erfindungsgemäß ganz besonders bevorzugt werden geschnittene Kohlenstofffasern mit einer mittels USB-Mikroskop zu bestimmenden Schnittlänge im Bereich von 4 bis 7mm eingesetzt, die der Formmasse insbesondere bevorzugt in Form von Kohlenstoffbündeln, vorzugsweise über einen Extruder oder mittels einer Spritzgussmaschine, beigemischt werden.

Besonders bevorzugt werden die Kohlenstofffasern der Komponente B) auf Extrudern der Komponente A) beigemischt, wobei die Eingabe im hinteren Bereich des Extruders, vorzugsweise über einen Seitenextruder, ganz besonders bevorzugt ist. "Hinten" bezieht sich dabei auf den Bereich des Extruders, der näher an der Abspinndüse liegt, während mit "vorne" der Teil gemeint ist, der weiter von der Abspinndüse entfernt liegt.

Sofern es der Bedarf erfordert, können die als Komponente B) einzusetzenden Kohlenstofffasern alternativ auch im vorderen Bereich, vorzugsweise über den Hauptabwurf eines Extruders, dosiert werden, was üblicherweise aber zu einer stärkeren Verkürzung der Kohlenstofffasern in der Formmasse und dadurch zu geringeren Steifigkeiten führt.

In einer alternativen Ausführungsform können die Kohlenstofffasern auch in Form eines Kohlenstofffaser-Masterbatches zur Komponente A), mit dem Ziel einer erfindungsgemäßen Formmasse, beigemischt werden.

Kommerziell sind erfindungsgemäß als Komponente B) einzusetzende Kohlenstofffasern beispielsweise unter dem Handelsnamen Tenax®-E-HT C604 6mm oder Tenax®-J HT C493 6mm von Toho Tenax Europe GmbH erhältlich, wobei letztere insbesondere bevorzugt ist.

**Komponente C)**

Als Komponente C) enthalten die Zusammensetzungen mindestens ein Aluminiumsalz der Phosphonsäure.

Unter Phosphonsäure wird dabei gemäß Wikipedia der Stoff mit der Summenformel $H_3PO_3$ [CAS-Nr. 13598-36-2] (**http://de.wikipedia.org/wiki/Phosphons%C3%A4ure**) verstanden. Die Salze der Phosphonsäure werden Phosphonate genannt. Die Phosphonsäure kann in zwei tautomeren Formen vorliegen, von denen eine ein freies Elektronenpaar am Phosphor-Atom hat und die andere einen doppelt gebundenen Sauerstoff zum Phosphor (P=O) aufweist. Das Tautomeriegleichgewicht liegt dabei ganz auf der Seite der Form mit dem doppelt gebundenen Sauerstoff. Gemäß A. F. Holleman, E. Wiberg: Lehrbuch der Anorganischen Chemie. 101. Auflage. Walter de Gruyter, Berlin/New York 1995, ISBN 3-11-012641-9, S. 764 sollen die Begriffe "Phosphorige Säure" bzw. "Phosphite" nur für die tautomeren Spezies mit einem freien Elektronenpaar am Phosphor verwendet werden. Früher wurden die Begriffe "Phosphorige Säure" bzw. "Phosphite" allerdings auch für die tautomeren Formen mit doppelt gebundenem Sauerstoff zum Phosphor verwendet, so dass in der vorliegenden Erfindung die Begriffe Phosphonsäure und Phosphorige Säure bzw. Phosphonate und Phosphite synonym zueinander gebraucht werden.

Bevorzugt wird als Komponente C) mindestens ein Aluminiumsalz der Phosphonsäure ausgewählt aus der Gruppe

primäres Aluminiumphosphonat [$Al(H_2PO_3)_3$],

basisches Aluminiumphosphonat [$Al(OH)H_2PO_3)_2 \cdot H_2O$],

$Al_2(HPO_3)_3 \bullet x\, Al_2O_3 \bullet n\, H_2O$ mit x im Bereich von 2,27 bis 1 und n im Bereich von 0 bis 4,

$Al_2(HPO_3)_3 \bullet (H_2O)_q$ der Formel (III) mit q im Bereich von 0 bis 4, insbesondere Aluminiumphosphonattetrahydrat [$Al_2(HPO_3)_3 \bullet 4H_2O$] oder sekundäres Aluminiumphosphonat [$Al_2(HPO_3)_3$],

$Al_2M_z(HPO_3)_y(OH)_v \cdot (H_2O)_w$ der Formel (IV) worin M Alkalimetallion(en) bedeutet und z im Bereich von 0,01 bis 1,5, y im Bereich von 2,63 - 3,5, v im Bereich von 0 bis 2 und w im Bereich von 0 bis 4 liegt, und

$Al_2(HPO_3)_u(H_2PO_3)_t \cdot (H_2O)_s$ der Formel (V) worin u im Bereich von 2 bis 2,99, t im Bereich von 2 bis 0,01 und s im Bereich von 0 bis 4 liegt,

wobei in Formel (IV) z, y und v sowie in Formel (V) u und t nur solche Zahlen annehmen, dass das entsprechende Aluminiumsalz der Phosphonsäure als Ganzes ungeladen ist.

Bevorzugte Alkalimetalle in Formel (IV) sind Natrium und Kalium.

Die beschriebenen Aluminiumsalze der Phosphonsäure können dabei einzeln oder im Gemisch eingesetzt werden.

Besonders bevorzugte Aluminiumsalze der Phosphonsäure werden ausgewählt aus der Gruppe

primäres Aluminiumphosphonat $[Al(H_2PO_3)_3]$,

sekundäres Aluminiumphosphonat $[Al_2(HPO_3)_3]$,

basisches Aluminiumphosphonat $[Al(OH)H_2PO_3)_2 \cdot 2H_2O]$,

Aluminiumphosphonattetrahydrat $[Al_2(HPO_3)_3 \cdot 4H_2O]$ und

$Al_2(HPO_3)_3 \cdot x\ Al_2O_3 \cdot n\ H_2O$ mit x im Bereich von 2,27 bis 1 und n im Bereich von 0 bis 4.

Ganz besonders bevorzugt sind sekundäres Aluminiumphosphonat $[Al_2(HPO_3)_3]$, CAS-Nr. 71449-76-8] und sekundäres Aluminiumphosphonattetrahydrat $[Al_2(HPO_3)_3 \cdot 4H_2O]$, CAS-Nr. 156024-71-4], insbesondere bevorzugt ist sekundäres Aluminiumphosphonat $[Al_2(HPO_3)_3]$.

Die Herstellung der erfindungsgemäß als Komponente C) einzusetzenden Aluminiumsalze der Phosphonsäure ist zum Beispiel in WO 2013/083247 A1 beschrieben. Sie erfolgt üblicherweise durch Umsetzung einer Aluminiumquelle, bevorzugt Aluminiumisopropoxid, Aluminiumnitrat, Aluminiumchorid oder Aluminiumhydroxid, mit einer Phosphorquelle, bevorzugt Phosphonsäure, Ammoniumphosphonat, Alkaliphosphonat. Gegebenenfalls wird dazu ein Templat eingesetzt. Die Umsetzung erfolgt in einem Lösungsmittel bei 20 bis 200°C während einer Zeitspanne von bis zu 4 Tagen. Aluminiumquelle und Phosphorquelle werden dazu vermischt, unter hydrothermalen Bedingungen oder am Rückfluss erhitzt, abfiltriert gewaschen und getrocknet.

Bevorzugte Template dabei sind 1,6 Hexandiamin, Guanidincarbonat oder Ammoniak.

Bevorzugtes Lösungsmittel ist Wasser.

**Komponente D)**

Als Komponente D) enthalten die erfindungsgemäßen Zusammensetzungen eines oder mehrere organische Phosphinsäuresalze der oben angegebenen Formel (I) und/oder eines oder mehrere Diphosphinsäuresalze der oben angegebenen Formel (II) und/oder deren Polymere. Phosphinsäuresalze und Diphosphinsäuresalze werden im Rahmen der vorliegenden Erfindung auch als Phosphinate bezeichnet.

Bevorzugt steht M in den Formeln (I) oder (II) für Aluminium. Bevorzugt sind $R^1$, $R^2$ in den Formeln (I) und (II) gleich oder verschieden und bedeuten $C_1$-$C_6$-Alkyl, linear oder verzweigt und/oder Phenyl. Besonders bevorzugt sind $R^1$, $R^2$ gleich oder verschieden und bedeuten Methyl, Ethyl, n-Propyl, iso-Propyl, n-Butyl, tert.-Butyl, n-Pentyl und/oder Phenyl.

Bevorzugt bedeutet $R^3$ in Formel (II) Methylen, Ethylen, n-Propylen, iso-Propylen, n-Butylen, tert.-Butylen, n-Pentylen, n-Octylen, n-Dodecylen, Phenylen, Naphthylen, Methylphenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbutylen. Besonders bevorzugt bedeutet $R^3$ Phenylen oder Naphthylen. Geeignete Phosphinate sind in der WO-A 97/39053 beschrieben, deren Inhalt in Bezug auf die Phosphinate von der vorliegenden Anmeldung mit umfasst wird. Besonders bevorzugte Phosphinate im Sinne der vorliegenden Erfindung sind Aluminium- und Zinksalze des Dimethylphosphinats, des Ethylmethylphosphinats, des Diethylphosphinats und des Methyl-n-propylphosphinats sowie deren Mischungen.

Bevorzugt steht m in Formel (I) für 2 und 3, besonders bevorzugt für 3.

Bevorzugt steht n in Formel (II) für 1 und 3, besonders bevorzugt für 3.

Bevorzugt steht x in Formel (II) für 1 und 2, besonders bevorzugt für 2.

Ganz besonders bevorzugt wird als Komponente D) Aluminium-tris(diethylphosphinat) [CAS Nr. 225789-38-8] eingesetzt, das z.B. von der Fa. Clariant International Ltd. Muttenz, Schweiz unter dem Handelsnamen Exolit® OP1230

oder Exolit® OP1240 angeboten wird.

**Komponente E)**

Als Komponenten E) können die Zusammensetzungen wenigstens einen Thermostabilisator ausgewählt aus der Gruppe der sterisch gehinderten Phenole enthalten.

Dabei handelt es sich um Verbindungen mit phenolischer Struktur, die am phenolischen Ring mindestens eine sterisch anspruchsvolle Gruppe aufweisen. Bevorzugte sterisch gehinderte Phenole sind Verbindungen mit einem Molekülbaustein der Formel (VI),

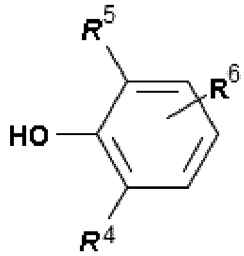

(VI)

worin $R^4$ und $R^5$ für eine Alkylgruppe, für eine substituierte Alkylgruppe oder für eine substituierte Triazolgruppe stehen, wobei die Reste $R^4$ und $R^5$ gleich oder verschieden sein können, und $R^6$ für eine Alkylgruppe, für eine substituierte Alkylgruppe, für eine Alkoxygruppe oder für eine substituierte Aminogruppe steht.

Sterische Hinderung bezeichnet in der organischen Chemie den Einfluss der räumlichen Ausdehnung eines Moleküls auf den Verlauf einer Reaktion. Der Begriff beschreibt die Tatsache, dass manche Reaktionen nur sehr langsam oder gar nicht ablaufen, wenn sich in der Umgebung der reagierenden Atome große und raumerfüllende Gruppen befinden. Ein bekanntes Beispiel für den Einfluss der sterischen Hinderung ist die Umsetzung von Ketonen in einer Grignard-Reaktion. Wird Di-*tert*-butylketon bei der Grignard-Reaktion eingesetzt, ist die Reaktion aufgrund der sehr raumerfüllenden tert-butyl-Gruppen so stark verlangsamt, dass maximal eine Methylgruppe eingeführt werden kann, noch größere Reste reagieren überhaupt nicht mehr.

Ganz besonders bevorzugte Thermostabilisatoren der Formel (VI) werden als Antioxidantien beispielsweise in der US-A 4 360 617 beschrieben, deren Inhalt von der vorliegenden Anmeldung vollumfänglich umfasst wird. Eine weitere Gruppe bevorzugter sterisch gehinderter Phenole leitet sich von substituierten Benzolcarbonsäuren ab, insbesondere von substituierten Benzolpropionsäuren. Besonders bevorzugte Verbindungen aus dieser Klasse sind Verbindungen der Formel (VII)

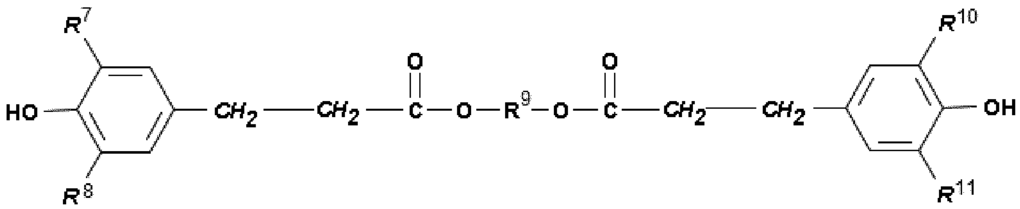

(VII)

worin $R^7$, $R^8$, $R^{10}$ und $R^{11}$ unabhängig voneinander $C_1$-$C_8$-Alkylgruppen darstellen, die ihrerseits substituiert sein können (mindestens eine davon ist eine sterisch anspruchsvolle Gruppe) und $R^9$ für einen zweiwertigen Alkylrest mit 1 bis 10 C-Atomen steht, der in der Hauptkette auch CO-Bindungen aufweisen kann. Bevorzugte Verbindungen der Formel (VII) sind Verbindungen der Formeln (VIII), (IX) und (X).

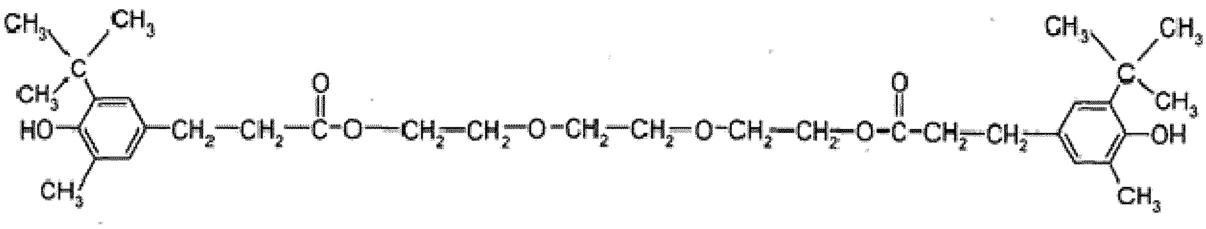

(VIII)

Formel (VIII) ist das Irganox® 245 der Firma BASF SE, [CAS Nr. 36443-68-2] mit der Bezeichnung Triethyleneglycol bis(3-tert-butyl-4-hydroxy-5-methylphenyl)propionate.

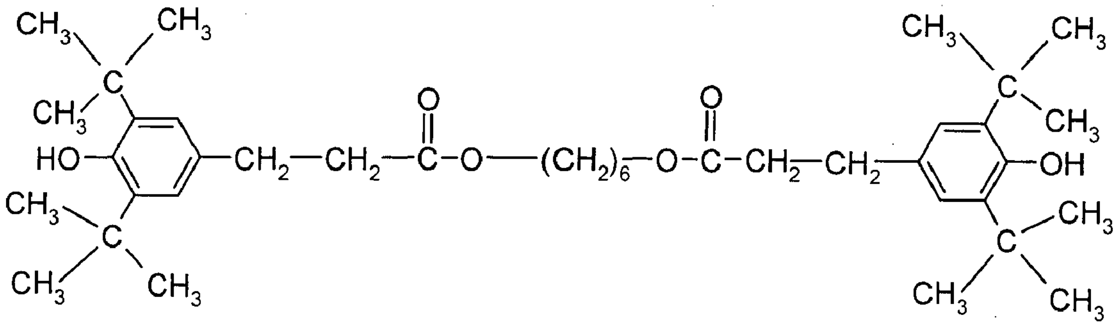

(IX)

Formel (IX) ist das Irganox® 259 der Firma BASF SE, [CAS Nr. 35074-77-2] mit der Bezeichnung 1,6-Hexamethylene bis (3,5-di-(tert)-butyl-4-hydroxyhydrocinnamate.

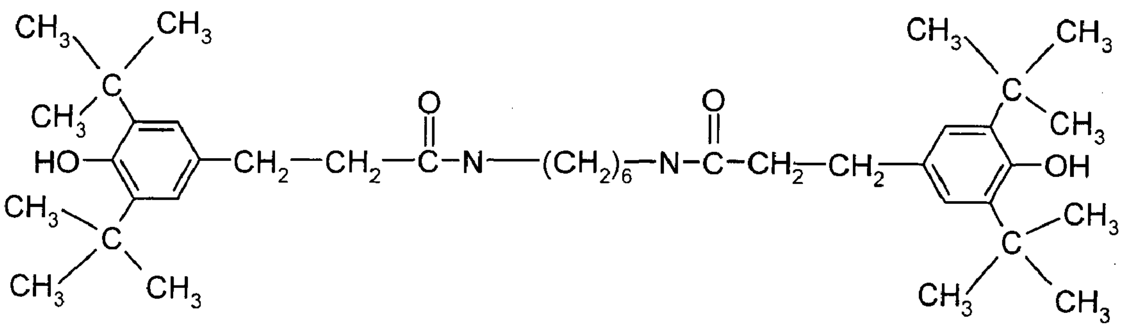

(X)

Formel (X) ist das Irganox® 1098 der Firma BASF SE, [CAS Nr. 23128-74-7] mit der Bezeichnung N,N'-Hexamethylene bis[3-(3,5-di-t-butyl-4-hydroxyphenyl)propionamide].

Ganz besonders bevorzugte als Komponente E) einzusetzende Thermostabilisatoren werden ausgewählt aus der Gruppe 2,2'-Methylen-bis-(4-methyl-6-tert.-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distearyl-3,5-di-tert.-butyl-4-hydroxybenzyl-phosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyldimethylamin.

Insbesondere bevorzugt als Komponente E) einzusetzende Thermostabilisatoren aus der Gruppe der sterisch

gehinderten Phenole sind 2,2'-Methylen-bis-(4-methyl-6-tert.-butylphenol), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] sowie N,N'-Hexamethylen-bis-3,5-di-tert.-butyl-4-hydroxyhydrocinnamid (Irganox® 1098) und das vorstehend beschriebene Irganox® 245 der Firma BASF SE, Ludwigshafen, Deutschland.

Erfindungsgemäß insbesondere ganz besonders bevorzugter Thermostabilistator aus der Gruppe der sterisch gehinderten Phenole ist N,N'-Hexamethylen-bis-3,5-di-tert.-butyl-4-hydroxyhydrocinnamid, [CAS Nr. 23128-74-7], das als Irganox® 1098 bei der BASF SE, Ludwigshafen, Deutschland oder als Lowinox® HD 98 u. a. von Weihai Jinwei ChemIndustry Co., Ltd. erhältlich ist.

**Komponente F)**

Als Komponenten F) können die Zusammensetzungen Glasfasern enthalten.

Gemäß **http://de.wikipedia.org/wiki/Faser-Kunststoff-Verbund** unterscheidet man geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200 $\mu$m liegt.

Erfindungsgemäß bevorzugt werden als Komponente F) geschnittene Langglasfasern mit einer Ausgangslänge im Bereich von 1 bis 50 mm, besonders bevorzugt im Bereich von 1 bis 10 mm, ganz besonders bevorzugt im Bereich von 2 bis 7 mm eingesetzt, wobei sich die Ausgangslänge auf die Länge unmittelbar vor Einarbeitung / Compoundierung in die Formmasse bezieht und die Faserlänge der geschnittenen Langglasfasern mittels USB-Mikroskop mit Kalibrierung bestimmt wird, insbesondere Dino-Lite Edge Digital Microscope AM7915MZT mit Dino Capture 2.0 Software; Dino-Lite Europe/IDCP B.V., Naarden, Niederlande.

Bevorzugte als Komponente F) einzusetzende Glasfasern haben einen Faserdurchmesser im Bereich von 7 bis 18 $\mu$m, besonders bevorzugt im Bereich von 9 bis 15 $\mu$m, wobei zur Bestimmung des Faserdurchmessers ein USB-Mikroskop mit Kalibrierung verwendet werden kann, insbesondere Dino-Lite Edge Digital Microscope AM7915MZT mit Dino Capture 2.0 Software; Dino-Lite Europe/IDCP B.V., Naarden, Niederlande. Die Glasfasern der Komponente F) werden in einer bevorzugten Ausführungsform mit einem geeigneten Schlichtesystem oder einem Haftvermittler bzw. Haftvermittlersystem ausgerüstet. Bevorzugt wird ein Schlichtesystem bzw. ein Haftvermittler auf Silanbasis eingesetzt. Alternative Haftvermittler finden sich in EP 1 713 848 B1**.**

Besonders bevorzugte Haftvermittler auf Silanbasis für die Behandlung der als Komponente F) einzusetzenden Glasfasern sind Silanverbindungen der allgemeine Formel (XI)

$$(X\text{-}(CH_2)_q)_k\text{-}Si\text{-}(O\text{-}CrH_{2r+1})_{4\text{-}k} \qquad \text{(XI)}$$

worin

X für $NH_2$-, Carboxyl-, HO- oder

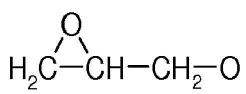

steht,

q in Formel (XI) für eine ganze Zahl von 2 bis 10, bevorzugt 3 bis 4 steht,

r in Formel (XI) für eine ganze Zahl von 1 bis 5, bevorzugt 1 bis 2 steht und

k in Formel (XI) für eine ganze Zahl von 1 bis 3, bevorzugt 1 steht.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidyl- oder eine Carboxylgruppe enthalten, wobei Carboxylgruppen insbesondere ganz besonders bevorzugt sind.

Für die Ausrüstung der als Komponente F) einzusetzenden Glasfasern wird der Haftvermittler, bevorzugt die Silanverbindungen gemäß Formel (XI), bevorzugt in Mengen von 0,05 bis 2 Gew.-%, besonders bevorzugt in Mengen von 0,25 bis 1,5 Gew.-% und ganz besonders bevorzugt in Mengen von 0,5 bis 1 Gew.-%, jeweils bezogen auf 100 Gew.-% Komponente F), eingesetzt.

Die Glasfasern der Komponente F) können bedingt durch die Verarbeitung zur Zusammensetzung bzw. zum Erzeugnis in selbigen kürzer sein, als die ursprünglich eingesetzten Glasfasern. So liegt der arithmetische Mittelwert der Glasfaserlänge nach der Verarbeitung häufig nur noch im Bereich von 150 μm bis 300 μm.

Gemäß **"http://www.r-g.de/wiki/Glasfasern"** werden Glasfasern im Schmelzspinnverfahren (Düsenzieh-, Stabzieh- und Düsenblasverfahren) hergestellt. Beim Düsenziehverfahren fließt unter Ausnutzung der Schwerkraft die heiße Glasmasse durch hunderte Düsenbohrungen einer Platinspinnplatte. Die Elementarfäden können in unbegrenzter Länge mit einer Geschwindigkeit von 3 - 4 km/Minute gezogen werden.

Der Fachmann unterscheidet verschiedene Glasfasersorten, wovon hier beispielsweise einige gelistet sind:

- E-Glas, das meistverwendete Material mit optimalem Preis-Leistungsverhältnis (E-Glas von R&G)
- H-Glas, Hohlglasfasern für reduziertes Gewicht (R&G Glashohlfasergewebe 160 g/$m^2$ und 216 g/$m^2$)
- R, S-Glas, für erhöhte mechanische Anforderungen (S2-Glas von R&G)
- D-Glas, Borsilicatglas für erhöhte elektrische Anforderungen
- C-Glas, mit erhöhter chemischer Widerstandsfähigkeit
- Quarzglas, mit hoher Temperaturbeständigkeit

Weitere Beispiele finden sich unter "**http://de.wikipedia.org/wiki/Glasfaser"**. Für die Kunststoffverstärkung haben E-Glasfasern die größte Bedeutung erlangt. E steht für Elektro-Glas, da es ursprünglich vor allem in der Elektroindustrie eingesetzt wurde. Für die Produktion von E-Glas werden Glasschmelzen aus reinem Quarz mit Zusätzen aus Kalkstein, Kaolin und Borsäure hergestellt. Sie enthalten neben Siliziumdioxid unterschiedliche Mengen verschiedener Metalloxide. Die Zusammensetzung bestimmt die Eigenschaften der Produkte. Erfindungsgemäß bevorzugt wird als Komponente F) wenigstens eine Sorte Glasfasern aus der Gruppe E-Glas, H-Glas, R,S-Glas, D-Glas, C-Glas und Quarzglas eingesetzt, besonders bevorzugt Glasfasern aus E-Glas.

**Komponente G)**

Als Komponente G) können die Zusammensetzungen wenigstens einen, von den Komponenten B) und F) verschiedenen, weiteren **Füllstoff oder Verstärkungsstoff** enthalten.

Dabei können auch Mischungen aus zwei oder mehreren unterschiedlichen Füllstoffen und/oder Verstärkungsstoffen, bevorzugt auf Basis von Talk, Glimmer, Silikat, amorphem Quarzglas, Quarzmehl, Wollastonit, Kaolin, amorphe Kieselsäuren, nanoskalige Mineralien, besonders bevorzugt Montmorillonite, Magnesiumcarbonat, Kreide, Feldspat, Bariumsulfat aber auch unbehandelte, oberflächenmodifizierte oder beschlichtete kugelförmige Füll- und Verstärkungsstoffe aus Glas eingesetzt werden. In einer alternativen Ausführungsform kann als Komponente G) aber auch - sofern es der Bedarf erfordert - Nano-Böhmit eingesetzt werden. Bevorzugt werden mineralische teilchenförmige Füllstoffe auf der Basis von Talk, Glimmer, Silikat, Wollastonit, Kaolin, amorphe Kieselsäuren, Magnesiumcarbonat, Kreide, Feldspat und/oder Bariumsulfat eingesetzt. Besonders bevorzugt werden mineralische teilchenförmige Füllstoffe auf der Basis von Talk, Wollastonit und/oder Kaolin eingesetzt.

Besonders bevorzugt werden ferner auch nadelförmige mineralische Füllstoffe eingesetzt. Unter nadelförmigen, mineralischen Füllstoffen wird erfindungsgemäß ein mineralischer Füllstoff mit stark ausgeprägtem nadelförmigen Charakter verstanden. Bevorzugt seien nadelförmige Wollastonite genannt. Bevorzugt weist der nadelförmige, mineralische Füllstoff ein Länge : Durchmesser - Verhältnis im Bereich von 2:1 bis 35:1, besonders bevorzugt im Bereich von 3:1 bis 19:1, insbesondere bevorzugt im Bereich von 4:1 bis 12:1 auf. Die mittlere Teilchengröße der nadelförmigen, mineralischen Füllstoffe liegt bevorzugt bei kleiner 20μm, besonders bevorzugt bei kleiner 15μm, insbesondere bevorzugt bei kleiner 10μm, bestimmt mit einem CILAS GRANULOMETER.

Besonders bevorzugt wird aber auch nicht-faserförmiges und nicht-geschäumtes gemahlenes Glas mit einer Teilchengrößenverteilung, die einen d90 im Bereich von 5 bis 250μm, bevorzugt im Bereich von 10 bis 150μm, besonders bevorzugt im Bereich von 15 bis 80μm, ganz besonders bevorzugt im Bereich von 16 bis 25μm aufweist. Bevorzugt wird nicht-faserförmiges und nicht-geschäumtes gemahlenes Glas eingesetzt, das zudem einen d10 im Bereich von 0,3 bis 10μm, bevorzugt im Bereich von 0,5 bis 6 μm, besonders bevorzugt im Bereich von 0,7 bis 3μm aufweist. Dabei ist

solches nicht-faserförmiges und nicht-geschäumtes gemahlenes Glas ganz besonders bevorzugt, das ferner einen d50 im Bereich von 3 bis 50μm, bevorzugt im Bereich von 4 bis 40μm, besonders bevorzugt im Bereich von 5 bis 30μm aufweist, wobei die Teilchengrößenverteilung mittels eines nach dem Prinzip der Laserverdunklung arbeitenden Teilchengrößenanalysator der Fa. Ankersmid bestimmt werden (Eye Tech® mit der darin enthaltender EyeTech®-Software und ACM-104 Messzelle, Ankersmid Lab, Oosterhout, Niederlande).

Bezüglich der d10, d50 und d90-Werte, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der d10-Wert diejenige Partikelgröße ist, unterhalb derer 10 % der Partikelmenge liegen, der d50-Wert diejenige Partikelgröße ist, unterhalb derer 50 % der Partikelmenge liegen (Medianwert) und der d90-Wert diejenige Partikelgröße ist, unterhalb derer 90 % der Partikelmenge liegen.

Die Angaben der Teilchengrößenverteilung bzw. der Teilchengrößen beziehen sich hierbei auf Teilchengrößen, jeweils unmittelbar vor Einarbeitung in die Formmasse zu ermitteln mit dem oben genannten nach dem Prinzip der Laserverdunklung arbeitenden Teilchengrößenanalysator der Fa. Ankersmid (Eye Tech® mit der darin enthaltender EyeTech®-Software und ACM-104 Messzelle, Ankersmid Lab, Oosterhout, Niederlande). Erfindungsgemäß bevorzugt ist das nicht-faserförmige und nicht-geschäumte gemahlene Glas von partikelförmiger, nicht zylindrischer Gestalt und hat ein Längen- zu Dickenverhältnis kleiner 5, bevorzugt kleiner als 3, besonders bevorzugt kleiner 2. Der Wert Null ist selbstverständlich ausgeschlossen.

Das als Komponente G) besonders bevorzugt einzusetzende nicht-geschäumte und nicht faserförmige gemahlene Glas ist zudem dadurch gekennzeichnet, dass es nicht die für faserförmiges Glas typische Glasgeometrie mit zylindrischem oder ovalen Querschnitt mit einem Längen- zu Durchmesserverhältnis (L/D-Verhältnis) größer 5 aufweist.

Das erfindungsgemäß als Komponente G) besonders bevorzugt einzusetzende nicht-geschäumte und nicht-faserförmige gemahlene Glas wird bevorzugt durch Mahlung von Glas mit einer Mühle, bevorzugt einer Kugelmühle und besonders bevorzugt mit anschließender Sichtung bzw. Siebung erhalten. Als Ausgangsmaterial kommen alle geometrischen Formen von erstarrtem Glas in Betracht.

Bevorzugte Ausgangsmaterialien für die Vermahlung zu erfindungsgemäß als Komponente G) einzusetzendem nicht-faserförmigem und nicht-geschäumtem, gemahlenem Glas sind auch Glasabfälle, wie sie insbesondere bei der Herstellung von Glaserzeugnissen als unerwünschtes Nebenprodukt und / oder als nicht spezifikationsgerechtes Hauptprodukt (sogenannte Offspec-Ware) anfallen. Hierzu gehört insbesondere Abfall-, Recycling- und Bruchglas wie es insbesondere bei der Herstellung von Fenster- oder Flaschenglas, sowie bei der Herstellung von glashaltigen Füll- und Verstärkungsstoffen, insbesondere in Form von sogenannten Schmelzekuchen, anfallen kann. Das Glas kann gefärbt sein, wobei nicht-gefärbtes Glas als Ausgangsmaterial bevorzugt ist.

Als Ausgangsglas für die Vermahlung kommen prinzipiell alle Glasarten in Betracht wie sie z.B. in DIN1259-1 beschrieben sind. Bevorzugt sind Kalk-Natron-Glas, Floatglas, Quarzglas, Bleikristallglas, Borsilikatglas A-Glas und E-Glas, wobei Kalk-Natron-Glas, Borsilikatglas, A-Glas und E-Glas besonders bevorzugt sind, A-Glas und E-Glas ganz besonders bevorzugt sind, insbesondere E-Glas. Bezüglich physikalischer Daten und Zusammensetzung von E-Glas sei auf **"http://wiki.r-g.de/index.php?title=Glasfasern"** verwiesen. Erfindungsgemäß insbesondere bevorzugt einzusetzendes nicht-faserförmiges und nicht-geschäumtes gemahlenes E-Glas zeichnet sich durch wenigstens eines der nachfolgend in **Tab. I** genannten Merkmale aus:

**Tab. I**

| **Eigenschaften E-Glas** | **Einheit** | **E-Glas** |
|---|---|---|
| Dichte | $g/cm^2$ bei 20 °C | 2,6 |
| Zugfestigkeit | MPa | 3400 |
| Zug_E-Modul | GPa | 73 |
| Bruchdehnung | % | 3,5-4 |
| **Chemische Zusammensetzung** | **Einheit** | **Wert** |
| $SiO_2$ | % | 53-55 |
| $Al_2O_3$ | % | 14-15 |
| $B_2O_3$ | % | 6-8 |
| CaO | % | 17-22 |
| MgO | % | <5 |
| $K_2O$, $Na_2O$ | % | <1 |

(fortgesetzt)

| Chemische Zusammensetzung | Einheit | Wert |
|---|---|---|
| Andere Oxide | % | ca.1 |

Ebenfalls besonders bevorzugt für die Herstellung des als Komponente G) einzusetzenden nicht-geschäumten und nicht-faserförmigen Glases sind Glasarten, bei denen der Gehalt an $K_2O$ kleiner oder gleich 2 Gew.-% bezogen auf alle Komponenten des Glases ist. Das erfindungsgemäß als Komponente G) einzusetzende nicht-geschäumte und nicht-faserförmige gemahlene Glas kann beispielsweise von der Firma VitroMinerals, Covington, GA, USA bezogen werden. Es wird als sogenanntes CS Glass Powder in den Spezifikationen CS-325, CS-500 und CS-600 oder auch als LA400 angeboten. (siehe auch "**www.glassfillers.com**" oder Chris DeArmitt, Additives Feature, Mineral Fillers, COMPOUNDING WORLD, Februar 2011, Seiten 28-38 bzw. "**www.compoundingworld.com**").

Das in bevorzugter Ausführungsform als Komponente G) einzusetzende nicht-geschäumte und nicht-faserförmige, gemahlene Glas hat vorzugsweise eine Dichte (nicht Schüttdichte !) nach ASTM C 693 im Bereich von 2400 bis 2700 kg/m$^3$, besonders bevorzugt im Bereich von 2400 bis 2600 kg/m$^3$ und unterscheidet sich damit deutlich von Schaumglas (Dichte = 100 - 165 kg/m$^3$) Schaumglas Granulat (Dichte = 130 - 170 kg/m$^3$) und Blähglas (Dichte = 110 - 360 kg/m$^3$) siehe auch **AGY Produktbroschüre Pub. No. LIT-2006-111 R2 (02/06).**

Erfindungsgemäß bevorzugt ist das als Komponente G) einzusetzende nicht-geschäumte und nicht-faserförmige, gemahlene Glas mit einer Oberflächenmodifizierung oder Schlichte auf Basis von Aminoalkyltrialkoxysilan versehen. In alternativen oder bevorzugten Ausführungsformen kann das nicht-geschäumte und nicht-faserförmige gemahlene Glas mit zusätzlicher Oberflächenmodifizierung oder Schlichte auf Silan- bzw. Siloxanbasis versehen sein, bevorzugt mit Glycidyl-, Carboxyl, Alkenyl-, Acryloxyalkyl- und/oder Methacryloxyalkyl- funktionalisierten Trialkoxysilanen oder deren wässriger Hydrolysate sowie Kombinationen daraus.

Bevorzugte Aminoalkyltrialkoxysilane sind Aminopropyltrimethoxysilan, Aminobutyltrimethoxysilan, Aminopropyltriethoxysilan, Aminobutyltriethoxysilan oder deren wässrige Hydrolysate, wobei Aminopropyltriethoxysilan ganz besonders bevorzugt ist.

Die Aminoalkyltrialkoxysilane werden bevorzugt in Mengen von 0,01 Gew.-% bis 1,5 Gew.-%, besonders bevorzugt in Mengen von 0,05 Gew.-% bis 1,0 Gew.-% und ganz besonders bevorzugt in Mengen von 0,1 Gew.-% bis 0,5 Gew.-% bezogen auf das nicht-geschäumte und nicht-faserförmige gemahlene Glas zur Oberflächenbeschichtung eingesetzt.

Das Ausgangsglas für die Vermahlung kann bereits mit Oberflächenmodifizierung oder Schlichte behandelt sein. Ebenso kann das erfindungsgemäß als Komponente G) einzusetzende nicht-geschäumte und nicht-faserförmige gemahlene Glas nach der Vermahlung mit Oberflächenmodifizierung oder Schlichte behandelt werden.

Insbesondere kann MF7900 der Lanxess Deutschland GmbH, Köln, eingesetzt werden, ein nicht-faserförmiges und nicht-geschäumtes gemahlenes Glas auf Basis E-Glas, mit einem nach der oben genannten Methode der Laserverdunklung (Teilchengrößenanalysator der Fa. Ankersmid) zu bestimmenden d90 von 54 $\mu$m, einem d50 von 14 $\mu$m, einem d10 von 2,4 $\mu$m und einer mittleren Teilchengröße von 21 $\mu$m, jeweils bezogen auf die Teilchenoberfläche, sowie enthaltend ca. 0,1 Gew.-% Triethoxy(3-aminopropyl)silan-Schlichte.

Das erfindungsgemäß als Komponente G) einzusetzende nicht-geschäumte und nicht-faserförmige, gemahlene Glas kann bedingt durch die Verarbeitung zur erfindungsgemäßen Zusammensetzung bzw. zu daraus herzustellenden Erzeugnissen und in den Erzeugnissen selber einen kleineren d90- bzw. d50-Wert bzw. d10-Wert bzw. eine kleinere mittlere Teilchengröße aufweisen, als die ursprünglich eingesetzten gemahlenen Partikel.

Abgesehen vom nicht-geschäumten und nicht-faserförmigen, gemahlenen Glas sind auch die als Komponente G) ferner genannten Füllstoffe und/oder Verstärkungsstoffe in einer bevorzugten Ausführungsform oberflächenmodifiziert, vorzugsweise mit einem Haftvermittler bzw. Haftvermittlersystem, besonders bevorzugt auf einem Haftvermittlersystem auf Silanbasis. Die Vorbehandlung ist jedoch nicht unbedingt erforderlich. Als Haftvermittler kommen vorzugsweise ebenfalls die bereits oben beschriebenen Silanverbindungen der allgemeinen Formel (XI) infrage.

Für die Ausrüstung der Komponente G) werden die Silanverbindungen im Allgemeinen in Mengen von 0,05 bis 2 Gew.-%, vorzugsweise in Mengen von 0,25 bis 1,5 Gew.-% und insbesondere in Mengen von 0,5 bis 1 Gew.-% bezogen auf den mineralischen Füllstoff der Komponente G) zur Oberflächenbeschichtung eingesetzt.

Auch diese ferner genannten Füllstoffe der Komponente G) können bedingt durch die Verarbeitung zur Zusammensetzung bzw. zum Erzeugnis aus der Zusammensetzung bzw. im Erzeugnis einen kleineren d97- bzw. d50-Wert aufweisen, als die ursprünglich eingesetzten Füllstoffe.

**Komponente H)**

Als Komponente H) wird wenigstens ein weiteres, von den Komponenten B) bis G) unterschiedliches, **Additiv**

eingesetzt.

Bevorzugte als Komponente H) einzusetzende Additive sind von den Komponenten B) bis G) verschiedene Antioxidantien und/oder Thermostabilisatoren, UV-Stabilisatoren, Gammastrahlenstabilisatoren, Hydrolysestabilisatoren, Antistatika, Emulgatoren, Nukleierungsmittel, Weichmacher, Verarbeitungshilfsmittel, Schlagzähmodifikatoren Farbstoffe, Pigmente, Laserabsorber, Gleit- und/oder Entformungsmittel, Komponenten zur Verringerung der Wasseraufnahme sowie weitere von den Komponenten C) und D) verschiedene Flammschutzmittel, Fließhilfsmittel oder Elastomermodifikatoren. Die als Komponente H) einzusetzenden Additive können alleine oder in Mischung bzw. in Form von Masterbatchen eingesetzt werden.

Bevorzugte **Thermostabilisatoren der Komponente H)** sind Phosphite, Hydrochinone, aromatische sekundäre Amine wie Diphenylamine, substituierte Resorcine, Salicylate, Benzotriazole und Benzophenone, sowie verschieden substituierte Vertreter dieser Gruppen oder deren Mischungen eingesetzt.

In einer alternativen Ausführungsform können als Komponente H) aber auch - sofern es der Bedarf erfordert - Kupfersalze, insbesondere Kupfer(I)iodid, dieses bevorzugt in Kombination mit Kaliumiodid, und/oder Natriumhypophosphit $NaH_2PO_2$, eingesetzt werden.

Als **UV-Stabilisatoren** werden bevorzugt substituierte Resorcine, Salicylate, Benzotriazole und Benzophenone eingesetzt.

Als Komponente H) einzusetzende **Farbmittel** werden bevorzugt anorganische Pigmente, insbesondere Ultramarinblau, Eisenoxid, Titandioxid, Zinksulfid oder Ruß, weiterhin organische Pigmente eingesetzt, insbesondere Phthalocyanine, Chinacridone, Perylene sowie Farbstoffe, insbesondere Nigrosin und Anthrachinone.

Als Komponente H) einzusetzende **Nukleierungsmittel** werden bevorzugt Natrium- oder Calciumphenylphosphinat, Aluminiumoxid oder Siliziumdioxid sowie ganz besonders bevorzugt Talkum eingesetzt, wobei diese Aufzählung nicht abschließend ist.

Als Komponente H) einzusetzende **Fließhilfsmittel** werden bevorzugt Copolymerisate aus mindestens einem $\alpha$-Olefin mit mindestens einem Methacrylsäurester oder Acrylsäureester eines aliphatischen Alkohols eingesetzt. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20C-Atomen enthält. Ganz besonders bevorzugt ist Acrylsäure-(2-ethyl)-hexylester, [CAS No. 26984-27-0]. Als Fließhilfsmittel geeignete Copolymerisate zeichnen sich neben der Zusammensetzung auch durch das niedrige Molekulargewicht aus. Dementsprechend sind für die erfindungsgemäß vor thermischem Abbau zu bewahrenden Zusammensetzungen vor allem Copolymerisate geeignet, die einen MFI-Wert gemessen bei 190°C und einer Belastung von 2,16 kg von mindestens 100 g / 10 min, bevorzugt von mindestens 150 g / 10 min, besonders bevorzugt von mindestens 300 g / 10 min aufweisen. Der MFI, Melt-Flow-Index, dient zur Charakterisierung des Flusses einer Schmelze eines Thermoplasten und unterliegt den Normen ISO 1133 oder ASTM D 1238.

Als Komponente H) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid bevorzugt.

Als Komponente H) einzusetzende **Elastomermodifikatoren** umfassen bevorzugt u.a. ein oder mehrere Pfropfpolymerisate von

H.1 5 bis 95 Gew.-%, vorzugsweise 30 bis 90 Gew.-%, wenigstens eines Vinylmonomeren und

H.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage H.2 hat im allgemeinen eine mittlere Teilchengröße (d50-Wert) von 0,05 bis 10 $\mu$m, vorzugsweise 0,1 bis 5 $\mu$m, besonders bevorzugt 0,2 bis 1 $\mu$m.

Monomere zu H.1 sind vorzugsweise Gemische aus

H.1.1 50 bis 99 Gew.-% Vinylaromaten und/oder kernsubstituierten Vinylaromaten, insbesondere Styrol, $\alpha$-Methylstyrol, p-Methylstyrol, p-Chlorstyrol, und/oder Methacrylsäure-($C_1$-$C_8$)-Alkylester, insbesondere. Methylmethacrylat, Ethylmethacrylat) und

H.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate insbesondere Anhydride und Imide ungesättigter Carbonsäuren, insbesondere Maleinsäureanhydrid oder N-Phenyl-Maleinimid).

Bevorzugte Monomere H.1.1 sind ausgewählt aus mindestens einem der Monomere Styrol, $\alpha$-Methylstyrol und Methylmethacrylat, bevorzugte Monomere H.1.2 sind ausgewählt aus mindestens einem der Monomere Acrylnitril, Maleinsäureanhydrid, Glycidylmethacrylat und Methylmethacrylat.

Besonders bevorzugte Monomere sind H.1.1 Styrol und H.1.2 Acrylnitril.

Für die in den Elastomermodifikatoren einzusetzenden Pfropfpolymerisate geeignete Pfropfgrundlagen H.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen H.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß H.1.1 und H.1.2, mit der Maßgabe, dass die Glasübergangstemperatur der Komponente H.2 bei <10°C, vorzugsweise bei <0°C, besonders bevorzugt bei <-10°C liegt.

Besonders bevorzugte Propfgrundlagen H.2 sind ABS-Polymerisate (Emulsions-, Masse- und Suspensions-ABS) wobei ABS für Acrylnitril-Butadien-Styrol steht, wie sie z. B. in der US-A 3 644 574 oder in GB-A 1 409 275 bzw. in Ullmann, Enzyklopädie der Technischen Chemie, Bd. 19 (1980), S. 277-295 beschrieben sind. Der Gelanteil der Pfropfgrundlage H.2 beträgt bevorzugt mindestens 30 Gew.-%, besonders bevorzugt mindestens 40 Gew.-% (in Toluol gemessen).

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen H.2 die vorzugsweise Polymerisate aus Acrylsäurealkylestern, gegebenenfalls mit bis zu 40 Gew.-%, bezogen auf H.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, Glycidylester sowie Mischungen dieser Monomeren. Dabei sind Propfpolymerisate mit Butylacrylat als Kern und Methylmethacrylaten als Schale, insbesondere. Paraloid® EXL2300, Fa. Dow Corning Corporation, Midland Michigan, USA, besonders bevorzugt.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage H.2.

Bei cyclischen vernetzenden Monomeren mit mindestens 3 ethylenisch ungesättigten Gruppen ist es vorteilhaft, die Menge auf unter 1 Gew.-% der Pfropfgrundlage H.2 zu beschränken.

Bevorzugte "andere" polymerisierbare, ethylenisch ungesättigte Monomere, die neben den Acrylsäureestern gegebenenfalls zur Herstellung der Pfropfgrundlage H.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage H.2 sind Emulsionspolymerisate, die einen Gelgehalt von mindestens 60 Gew.-% aufweisen.

Weitere bevorzugt geeignete Pfropfgrundlagen gemäß H.2 sind Silikonkautschuke mit pfropfaktiven Stellen, wie sie in US 4 859 740**,** US 4 861 831**,** US 4 806 593 und US 4 812 515 beschrieben werden.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Als Komponente H) einzusetzende **Flammschutzmittel** sind mineralische Flammschutzmittel, stickstoffhaltige Flammschutzmittel oder phosphorhaltige Flammschutzmittel verschieden von Komponente C) oder Komponente D)

bevorzugt.

Bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, Melamincyanurat und Kondensationsprodukte des Melamins wie z.B. Melem, Melam, Melon bzw. höherkondensierte Verbindungen dieses Typs. Bevorzugte anorganische stickstoffhaltige Verbindungen sind Ammoniumsalze.

Ferner können auch Salze aliphatischer oder aromatischer Sulfonsäuren oder mineralische Flammschutzadditive, insbesondere Aluminium- und/oder Magnesiumhydroxid sowie Ca-Mg-Carbonat-Hydrate (z.B. DE-A 4 236 122) eingesetzt werden.

In Frage kommen ferner Flammschutzmittelsynergisten aus der Gruppe der sauerstoffstickstoff- oder schwefelhaltigen Metallverbindungen, wobei zinkfreie Verbindungen aus den oben genannten Gründen, insbesondere Molybdänoxid, Magnesiumoxid, Magnesiumcarbonat, Calciumcarbonat, Calciumoxid, Titannitrid, Bornitrid, Magnesiumnitrid, Calciumphosphat, Calciumborat, Magnesiumborat oder deren Mischungen besonders bevorzugt sind.

In einer alternativen Ausführungsform können als Komponente H) aber auch - sofern es der Bedarf erfordert unter Berücksichtigung der oben beschriebenen Nachteile - zinkhaltige Verbindungen eingesetzt werden. Hierzu zählen bevorzugt Zinkoxid, Zinkborat, Zinkstannat, Zinkhydroxystannat, Zinksulfid und Zinknitrid, oder deren Mischungen.

In einer alternativen Ausführungsform können als Komponente H) aber auch - sofern der Bedarf es erfordert unter Berücksichtigung der damit verbundenen Nachteile, - halogenhaltige Flammschutzmittel eingesetzt werden.

Bevorzugte halogenhaltige Flammschutzmittel sind handelsübliche organische Halogenverbindungen, besonders bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol oder bromierte Polyphenylenether, die alleine oder in Kombination mit Synergisten, insbesondere Antimontrioxid oder Antimontpentoxid, eingesetzt werden können.

Bevorzugte phosphorhaltige Flammschutzmittel verschieden von Komponente C) oder D) sind roter Phosphor, anorganische Metallhypophosphite, insbesondere Aluminiumhypophosphit, Metallphosphonate insbesondere Calciumphosphonat, Derivate der 9,10-Dihydro-9-oxa-10-phosphaphenanthren-10-oxide (DOPO-Derivate), Resorcinol-bis-(diphenylphosphat) (RDP), einschließlich Oligomere sowie Bisphenol-A-bis-diphenylphosphat (BDP) einschließlich Oligomere, ferner Melaminpyrophosphat und, sofern es der Bedarf erfordert, Melaminpolyphosphat, ferner Melamin-poly(aluminiumphosphat), Melamin-poly(zinkphosphat) oder Phenoxyphosphazenoligomere und deren Mischungen.

Weitere als Komponente H) einzusetzende Flammschutzmittel sind Kohlebildner, besonders bevorzugt Phenol-Formaldehydharze, Polycarbonate, Polyimide, Polysulfone, Polyethersulfone oder Polyetherketone sowie Antitropfmittel, insbesondere Tetrafluorethylenpolymerisate.

Die Flammschutzmittel können in Reinform, sowie über Masterbatche oder Kompaktate zugesetzt werden.

Als Komponente H) einzusetzende **Gleit- und/oder Entformungsmittel** sind bevorzugt langkettige Fettsäuren, insbesondere Stearinsäure oder Behensäure, deren Salze, insbesondere Ca- oder Zn-Stearat, sowie deren Esterderivate oder Amidderivate, insbesondere Ethylen-bis-stearylamid, Montanwachse sowie niedermolekulare Polyethylen- bzw. Polypropylenwachse.

Montanwachse im Sinne der vorliegenden Erfindung sind Mischungen aus geradkettigen, gesättigten Carbonsäuren mit Kettenlängen von 28 bis 32 C-Atomen.

Erfindungsgemäß werden besonders bevorzugt Gleit- und/oder Entformungsmittel aus der Gruppe der Ester oder Amide gesättigter oder ungesättigter aliphatischer Carbonsäuren mit 8 bis 40 C-Atomen mit aliphatischen gesättigten Alkoholen oder Aminen mit 2 bis 40 C-Atomen sowie Metallsalze gesättigter oder ungesättigter aliphatischer Carbonsäuren mit 8 bis 40 C-Atomen eingesetzt.

Ganz besonders bevorzugt wird wenigstens ein Gleit- und/oder Entformungsmittel aus der Gruppe Ethylen-bis-stearylamid, Calciumstearat und Ethylenglycoldimontanat eingesetzt.

Insbesondere bevorzugt wird Calciumstearat [CAS No. 1592-23-0] oder Ethylen-bis-stearylamid [CAS No 110-30-5] eingesetzt.

Insbesondere besonders bevorzugt wird Ethylen-bis-stearylamid (Loxiol® EBS von Emery Oleochemicals) eingesetzt.

Als Komponente H) einzusetzende **Komponenten zur Verringerung der Wasseraufnahme** werden teilaromatische Polyamide und/oder Polyalkylenterephthalate bevorzugt, wobei Polyalkylenterephthalate ganz besonders bevorzugt sind.

Dabei werden unter den teilaromatischen Polyamiden wiederum bevorzugt solche eingesetzt, die ausgehend von $\alpha,\omega$-Diaminen und den Benzoldicarbonsäuren Isophthalsäure und Terephthalsäure, vorzugsweise Isophthalsäure, hergestellt werden. Bevorzugte aromatische Baueinheiten werden ausgewählt aus Edukten der Gruppe Isophthalsäure, Terephthalsäure, Phenylendiamin, Xylylendiamin. Bevorzugte $\alpha,\omega$-Diamine sind 1,4-Diaminobutan (Hexabutylendiamin) oder 1,6-Diaminobutan (Hexamethylendiamin). Ganz besonders bevorzugt als Komponenten zur Verringerung der Wasseraufnahme einzusetzende teilaromatische Polyamide werden aus Isophthalsäure (PA6I) [CAS Nr. 25668-34-2]

oder Terephthalsäure (PA6T) [CAS Nr. 24938-70-3] und Hexamethylendiamin [CAS Nr. 124-09-4] hergestellt. Ganz besonders bevorzugt ist PA6I, das unter anderem als Durethan® T40 bei der LANXESS Deutschland GmbH, Köln, erhältlich ist.

Die teilaromatischen Polyamide werden dabei bevorzugt in Mengen im Bereich von 1 bis 50 Massenanteilen, besonders bevorzugt in Mengen im Bereich von 3 bis 40 Massenanteilen, ganz besonders bevorzugt in Mengen im Bereich von 8 bis 25 Massenanteilen, jeweils bezogen auf 100 Massenanteile der Komponente A), eingesetzt.

Unter den Polyalkylenterephthalaten werden als Komponenten zur Verringerung der Wasseraufnahme besonders bevorzugt Polybutylenterepthalat und/oder Polyethylenterephthalat eingesetzt, wobei Polyethylenterephthalat ganz besonders bevorzugt ist. Die Polyalkylenterephthalate werden dabei bevorzugt in Mengen im Bereich von 1 bis 50 Massenanteilen, besonders bevorzugt in Mengen im Bereich von 3 bis 40 Massenanteilen, ganz besonders bevorzugt in Mengen im Bereich von 8 bis 25 Massenanteilen, jeweils bezogen auf 100 Massenanteile der Komponente A), eingesetzt. Kommerziell ist erfindungsgemäß einzusetzendes Polyethylenterephthalat beispielsweise als PET V004 (Homopolymer; Invista, Gersthofen, Deutschland) oder als PET Lighter® C93 (Coplymer; Equipolymers, Mailand, Italien) erhältlich.

Als Komponente H) bevorzugt einzusetzende **Laserabsorber** werden bevorzugt ausgewählt aus der Gruppe Antimontrioxid, Zinnoxid, Zinnorthophosphat, Bariumtitanat, Aluminiumoxid, Kupferhydroxyphosphat, Kupferorthophosphat, Kaliumkupferdiphosphat, Kupferhydroxid, Antimonzinnoxid, Bismuttrioxid und Antrachinon. Besonders bevorzugt sind Antimontrioxid und Antimonzinnoxid. Ganz besonders bevorzugt ist Antimontrioxid.

Der Laserabsorber, insbesondere das Antimontrioxid, kann direkt als Pulver oder in Form von Masterbatchen eingesetzt werden. Bevorzugte Masterbatche sind solche auf Basis von Polyamid oder solche auf Basis von Polybutylenterephthalat, Polyethylen, Polypropylen, Polyethylen-Polypropylen-Copolymer, Maleinsäureanhydrid-gepfropftem Polyethylen und/oder Maleinsäureanhydrid gepfropftem-Polypropylen, wobei die Polymere für den Antimontrioxid-Masterbatch einzeln oder im Gemisch eingesetzt werden können. Ganz besonders bevorzugt wird Antimontrioxid in Form eines Polyamid 6-basierten Masterbatches eingesetzt.

Der Laserabsorber kann einzeln, oder als Gemisch mehrerer Laserabsorber, eingesetzt werden.

Laserabsorber können Laserlicht einer bestimmten Wellenlänge absorbieren. In der Praxis liegt diese Wellenlänge im Bereich von 157 nm bis 10,6 $\mu$m. Beispiele für Laser dieser Wellenlängen sind in WO2009/003976 A1 beschrieben. Bevorzugt werden Nd:YAG Laser, mit denen Wellenlängen von 1064, 532, 355 und 266 nm realisiert werden können, und $CO_2$-Laser eingesetzt.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 6 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \cdot (H_2O)_q$ mit q im Bereich von 0 bis 4,

D) Aluminium-tris(diethylphosphinat),

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 66 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \cdot (H_2O)_q$ mit q im Bereich von 0 bis 4,

D) Aluminium-tris(diethylphosphinat),

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 6 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \cdot (H_2O)_q$ mit q im Bereich von 0 bis 4,

D) Aluminium-tris(diethylphosphinat) und

E) wenigstens einen Thermostabilisator aus der Gruppe

2,2'-Methylen-bis-(4-methyl-6-tert.-butylphenol),

1,6-Hexandiol-bis-(3,5-di-tert.-butyl-4-hydroxyphenyl]-propionat Pentaerythrityl-tetrakis-[3-(3,5-di-tert.-butyl-4-hydroxyphenyl)-propionat],

N,N'-Hexamethylen-bis-3,5-di-tert.-butyl-4-hydroxyhydrocinnamid und

Triethylene glycol bis(3-tert-butyl-4-hydroxy-5-methylphenyl)propionate,

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 66 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,,

C) Aluminiumphosphonat der Formel $Al_2(HPO_3)_3 \cdot (H_2O)_q$ mit q im Bereich von 0 bis 4,

D) Aluminium-tris(diethylphosphinat) und

E) wenigstens einen Thermostabilisator aus der Gruppe

2,2'-Methylen-bis-(4-methyl-6-tert.-butylphenol),

1,6-Hexandiol-bis-(3,5-di-tert.-butyl-4-hydroxyphenyl]-propionat, Pentaerythrityl-tetrakis-[3-(3,5-di-tert.-butyl-4-hydroxyphenyl)-propionat],

N,N'-Hexamethylen-bis-3,5-di-tert.-butyl-4-hydroxyhydrocinnamid und

Triethylene glycol bis(3-tert-butyl-4-hydroxy-5-methylphenyl)propionate,

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 6 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \cdot (H_2O)_q$ mit q im Bereich von 0 bis 4,

D) Aluminium-tris(diethylphosphinat) und

E) N,N'-Hexamethylen-bis-3,5-di-tert.-butyl-4-hydroxyhydrocinnamid,

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 66 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \cdot (H_2O)_q$ mit q im Bereich von 0 bis 4,

D) Aluminium-tris(diethylphosphinat) und

E) N,N'-Hexamethylen-bis-3,5-di-tert.-butyl-4-hydroxyhydrocinnamid,

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 6 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \bullet (H_2O)_q$ mit q im Bereich von 0 bis 4,

D) Aluminium-tris(diethylphosphinat), und

H) wenigstens einem teilaromatischen Polyamid

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 66 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \bullet (H_2O)_q$ mit q im Bereich von 0 bis 4,

D) Aluminium-tris(diethylphosphinat), und

H) wenigstens einem teilaromatischen Polyamid,

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 6 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \bullet (H_2O)_q$ mit q im Bereich von 0 bis 4,

D) Aluminium-tris(diethylphosphinat) und

E) wenigstens einen Thermostabilisator aus der Gruppe

2,2'-Methylen-bis-(4-methyl-6-tert.-butylphenol),

1,6-Hexandiol-bis-(3,5-di-tert.-butyl-4-hydroxyphenyl]-propionat Pentaerythrityl-tetrakis-[3-(3,5-di-tert.-butyl-4-hydroxyphenyl)-propionat],

N,N'-Hexamethylen-bis-3,5-di-tert.-butyl-4-hydroxyhydrocinnamid und

Triethylene glycol bis(3-tert-butyl-4-hydroxy-5-methylphenyl)propionate, und

H) wenigstens einem teilaromatischen Polyamid,

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 66 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \cdot (H_2O)_q$ mit q im Bereich von 0 bis 4,

D) Aluminium-tris(diethylphosphinat) und

E) wenigstens einen Thermostabilisator aus der Gruppe

2,2'-Methylen-bis-(4-methyl-6-tert.-butylphenol),

1,6-Hexandiol-bis-(3,5-di-tert.-butyl-4-hydroxyphenyl]-propionat, Pentaerythrityl-tetrakis-[3-(3,5-di-tert.-butyl-4-hydroxyphenyl)-propionat],

N,N'-Hexamethylen-bis-3,5-di-tert.-butyl-4-hydroxyhydrocinnamid und

Triethylene glycol bis(3-tert-butyl-4-hydroxy-5-methylphenyl)propionate, und

H) wenigstens einem teilaromatischen Polyamid,

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 6 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \cdot (H_2O)_q$ mit q im Bereich von 0 bis 4,

D) Aluminium-tris(diethylphosphinat) und

E) N,N'-Hexamethylen-bis-3,5-di-tert.-butyl-4-hydroxyhydrocinnamid, und

H) wenigstens einem teilaromatischen Polyamid,

wobei zur Längenbestimmung der Komponente B) ein USB-Mikroskop mit Kalibrierung verwendet wird.

In bevorzugter Ausführung betrifft die vorliegende Erfindung Zusammensetzungen bzw. Erzeugnisse, vorzugsweise Batteriesystemkomponenten, basierend auf Zusammensetzungen, enthaltend

A) Polyamid 66 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,

B) Kohlenstofffasern, vorzugsweise mit einer mittleren Länge im Bereich von 4 bis 7mm,

C) Aluminiumphosphonat der Formel $Al_2(HPO_3)_3 \cdot (H_2O)_q$ mit q im Bereich von 0 bis 4,

D) Aluminium-tris(diethylphosphinat) und

E) N,N'-Hexamethylen-bis-3,5-di-tert.-butyl-4-hydroxyhydrocinnamid, und

H) wenigstens einem teilaromatischen Polyamid,

wobei zur Längenbestimmung der Komponente B) ein USB-Mikroskop mit Kalibrierung verwendet wird.

**Verfahren**

Die vorliegende Erfindung betrifft zudem ein Verfahren zur Herstellung PA6 und/oder PA66 basierter Zusammensetzungen und daraus herzustellender Erzeugnisse, vorzugsweise durch Spritzguss, welche sich - im Vergleich zu Zusammensetzungen des Standes der Technik - dadurch auszeichnen, dass in der UL94-Prüfung nach der Methode UL94V, insbesondere bei Wandstärken von 1,5mm, eine V-0 Klassifizierung erreicht wird und/oder dass die Oberflächenqualität nach Lagerung in fechtwarmem Klima weniger negativ beeinträchtigt wird, indem man

Kohlenstofffasern, vorzugsweise mit einer mittleren Länge im Bereich von 4 bis 7mm,
mit
mindestens ein Aluminiumsalz der Phosphonsäure und
mit einem oder mehreren organischen Phosphinsäuresalzen der Formel (I) und/oder einem oder mehreren Diphosphinsäuresalzen der Formel (II) und/oder deren Polymere,

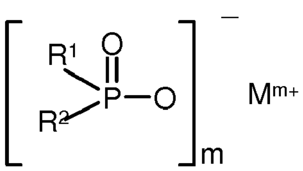 (I) 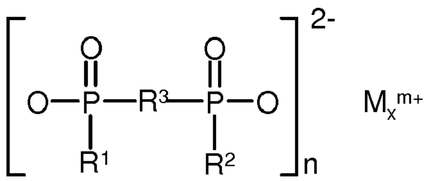 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,

$R^3$ für lineares oder verzweigtes $C_1$-$C_{10}$-Alkylen, $C_6$-$C_{10}$-Arylen oder für $C_1$-$C_6$- Alkyl-$C_6$-$C_{10}$-arylen oder $C_6$-$C_{10}$-Aryl-$C_1$-$C_6$-alkylen steht,

M für Aluminium, Zink oder Titan steht,

m für eine ganze Zahl von 1 bis 4 steht;

n für eine ganze Zahl von 1 bis 3 steht,

x für 1 und 2 steht,

wobei n, x und m in Formel (II) gleichzeitig nur solche ganzen Zahlen annehmen können, dass das Diphosphinsäuresalz der Formel (II) als Ganzes ungeladen ist, in Kombination miteinander einsetzt, wobei das jeweilige Polyamid eine nach ISO 307 in 0,5 gew.-%iger Lösung in 96 gew.-%iger Schwefelsäure bei 25 °C zu bestimmende Viskositätszahl im Bereich von 80 bis 180 ml/g aufweist, wobei zur Längenbestimmung der Kohlenstofffasern ein USB-Mikroskop mit Kalibrierung verwendet wird.

Bevorzugt betrifft die Erfindung ein Verfahren zur Herstellung PA6 und/oder PA66 basierter Zusammensetzungen und daraus herzustellender Erzeugnisse, vorzugsweise durch Spritzguss, welche sich - im Vergleich zu Zusammensetzungen des Standes der Technik - dadurch auszeichnen, dass in der UL94-Prüfung nach der Methode UL94V, insbesondere bei Wandstärken von 1,5mm, eine V-0 Klassifizierung erreicht wird und/oder dass die Oberflächenqualität nach Lagerung in fechtwarmem Klima weniger negativ beeinträchtigt wird, indem man Kohlenstofffasern, vorzugsweise mit einer mittleren Länge im Bereich von 4 bis 7mm, mit einem sekundären Aluminiumphosphonat, der Formel $Al_2(HPO_3)_3 \cdot (H_2O)_q$ mit q im Bereich von 0 bis 4, hergestellt nach Beispiel 2 der WO 2013/083247 A1**,** mit Aluminium-tris(diethylphosphinat), in Kombination miteinander einsetzt, wobei das jeweilige Polyamid eine nach ISO 307 in 0,5 gew.-%iger Lösung in 96 gew.-%iger Schwefelsäure bei 25 °C zu bestimmende Viskositätszahl im Bereich von 80 bis 180 ml/g aufweist, wobei zur Längenbestimmung der Kohlenstofffasern ein USB-Mikroskop mit Kalibrierung verwendet wird.

Die vorliegende Erfindung betrifft zudem ein Verfahren zur Herstellung von Erzeugnissen, bevorzugt von Erzeugnissen für den Einsatz im elektrischen Antriebsstrang und/oder Batteriesystem von Fahrzeugen mit elektrischen Antrieb, insbesondere Hybrid- oder Elektrofahrzeuge, besonders bevorzugt im Bereich des Batteriesystems, insbesondere bevorzugt für Strukturbauteile zur Einfassung, Befestigung und Aufhängung des Batteriesystems und/oder einzelner Komponenten des Batteriesystems, insbesondere Zellmodule, Kühlvorrichtungen und/oder Batteriemanagementsysteme durch Einsatz der erfindungsgemäßen Zusammensetzungen im Spritzguss einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, oder beim Blasformen.

Zur Herstellung dieser Erzeugnisse werden die einzelnen Komponenten der erfindungsgemäßen Zusammensetzungen zunächst in wenigstens einem Mischwerkzeug gemischt bzw. compoundiert und diese dann als Formmasse vorliegende Mischung durch wenigstens einen Mischwerkzeugauslass entweder der direkten Weiterverarbeitung zugeführt, oder als Strang ausgetragen und mittels eines Granulators, bevorzugt einer rotierenden Messerwalze, in Granulate gewünschter Länge geschnitten, um für eine spätere Verarbeitung zur Verfügung zu stehen. Der Fachmann versteht unter Compoundierung (aus dem Englischen: Compound = "Mischung") einen Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt; siehe: **https://de.wikipedia.org/wiki/Compoundierung.** Die Compoundierung erfolgt vorzugsweise in Extrudern. Die Compoundierung umfasst die Verfahrensoperationen Fördern, Aufschmelzen, Dispergieren, Mischen, Entgasen und Druckaufbau.

Da die meisten Verarbeiter Kunststoff in Form von Granulat benötigen, spielt das Granulieren der aus den erfindungsgemäßen Zusammensetzungen erhältlichen Formmassen eine wesentliche Rolle. Man unterscheidet grundsätzlich zwischen Heiß- und Kaltabschlag. Je nach Verarbeitung resultieren daraus verschiedene Kornformen. Im Falle der Heißabschlags erhält man das die erfindungsgemäßen Zusammensetzungen enthaltende Granulat in Perlen oder Linsenkornform, im Falle des Kaltabschlags erhält man das Granulat in Zylinderformen oder Würfelformen. Erfindungsgemäße Zusammensetzungen enthaltende Formmassen in Granulatform werden bevorzugt durch Kaltabschlag erhalten.

Dem Fachmann steht es frei, verschiedene Mischwerkzeuge einzusetzen, die geeignet sind, ein optimales Mischergebnis hinsichtlich einer Mischung der Komponenten in den aus den erfindungsgemäßen Zusammensetzungen erhältlichen Formmassen zu erzielen. Ein Extruder ist ein bevorzugtes Mischwerkzeug im Sinne der vorliegenden Erfindung. Bevorzugte Extruder sind Einschneckenextruder oder Doppelschneckenextruder sowie die jeweiligen Untergruppen, ganz besonders bevorzugt konventionelle Einschneckenextruder, förderwirksame Einschneckenextruder, gegenläufige Doppelschneckenextruder, gleichläufige Doppelschneckenextruder, Planetwalzenextrudern oder Co-Kneter.

Diese sind dem Fachmann aus Technische Thermoplaste 4. Polyamide, Hrsg.: G. W. Becker und D. Braun, Carl Hanser Verlag, 1998, S. 311-314 sowie K. Brast, Dissertation "Verarbeitung von Langfaser-verstärkten Thermoplasten im direkten Plastifizier-/Pressverfahren", Rheinisch-Westfälische Technische Hochschule Aachen, 2001, S. 30-33 bekannt.

Aus den erfindungsgemäß als Formmasse bzw. Granulat vorliegenden Zusammensetzungen werden durch formgebende Verfahren schließlich die erfindungsgemäßen Erzeugnisse hergestellt. Bevorzugte formgebende Verfahren sind der Spritzguss oder die Extrusion.

Erfindungsgemäße Verfahren zur Herstellung von Erzeugnissen durch Extrusion oder Spritzguss werden bevorzugt bei Schmelzetemperaturen im Bereich von 230 bis 330°C, besonders bevorzugt bei Schmelzetemperaturen im Bereich von 250 bis 300°C sowie bevorzugt zusätzlich bei Drücken von maximal 2500 bar, besonders bevorzugt bei Drücken von maximal 2000 bar, ganz besonders bevorzugt bei Drücken von maximal 1500 bar und insbesondere bevorzugt bei Drücken von maximal 750 bar, durchgeführt.

## Verwendung

Gegenstand der vorliegenden Anmeldung ist auch die Verwendung der erfindungsgemäßen Zusammensetzungen als Formmassen im Spritzguss, einschließlich der Sonderverfahren GIT (Gasinjektionstechnik), WIT (Wasserinjektionstechnik) und PIT (Projektilinjektionstechnik), in Extrusionsverfahren, einschließlich in der Profil-Extrusion, im Blasformen, besonders bevorzugt Standard-Extrusionsblasformen, 3D-Extrusionsblasformverfahren oder Saugblasformverfahren sowie im 3D-Druck, um daraus erfindungsgemäße Erzeugnisse mit sehr hohem Biegemodul, hoher Flammwidrigkeit und wenig Oberflächenveränderung bei feucht warmer Umgebung herzustellen.

Die vorliegende Erfindung betrifft aber auch die Verwendung der erfindungsgemäßen Zusammensetzungen zur Herstellung von Erzeugnissen, bevorzugt von Erzeugnissen für den Einsatz im elektrischen Antriebsstrang und/oder Batteriesystem von Fahrzeugen mit elektrischen Antrieb (Hybrid- oder Elektrofahrzeuge), besonders bevorzugt im Bereich eines Batteriesystems, insbesondere bevorzugt für Strukturbauteile zur Einfassung, Befestigung und Aufhängung eines Batteriesystems und/oder einzelner Komponenten eines Batteriesystems, vorzugsweise Zellmodule, Kühlvorrichtungen und/oder der Batteriemanagementsysteme.

Ein weiterer bevorzugter Gegenstand der vorliegenden Erfindung ist auch die Verwendung der erfindungsgemäßen Zusammensetzungen als Formmasse zum Über-, Um-, Hinter- oder Anspritzen von Metallen, Funktionselementen und/oder Faser-Matrix-Halbzeugen, wobei Letztere bevorzugt sind. Das Überspritzen, Umspritzen, Hinterspritzen oder das Anspritzen bzw. Anformen erfolgt durch Gießen oder Spritzgießen, bevorzugt Spritzgießen. Dieses kann vollflächig, partiell oder umlaufend erfolgen. Das Spritzgießen kann dabei ein Hinterspritzen und/oder Anspritzen und/oder Umspritzen sein. Diese Technik ist als In-Mold-Forming (IMF) bekannt, ein integratives Spritzgieß-Sonderverfahren, das zur Herstellung hybrider Strukturbauteile aus unterschiedlichen Werkstoffen dient; siehe **http://www.industrieanzeiger.de/home/- /article/12503/11824771/.** Durch IMF ist es möglich, im Kantenbereich eines Faser-Matrix-Halbzeugs freiliegende Verstärkungsfasern einzuschließen. Hierdurch wird ein Strukturbauteil mit besonders glatten Kanten erzeugt. Durch das IMF wird aber auch ein anzuformendes Funktionselement geformt und gleichzeitig mit der Faser-Matrix-Halbzeug-Komponente verbunden, insbesondere ohne Einsatz zusätzlicher Klebemittel. Das Prinzip des IMF ist auch aus DE 4101106 A1**,** US 6036908 B**,** US 6475423 B1 oder WO 2005/070647 A1 bekannt.

Als Matrixkunststoff für ein Faser-Matrix-Halbzeug zur erfindungsgemäß bevorzugten Anwendung im IMF kommen vorzugsweise dieselben Kunststoffe infrage, die bereits als Polymer für eine erfindungsgemäße Formmasse eingesetzt werden, hier also PA 6 und/oder PA 66.

Für die textile Verstärkung des zu über-, um-, hinter- oder anzuspritzenden Faser-Matrix-Halbzeugs kommen textile Halbzeuge zum Einsatz, worin eine Vielzahl von Einzelfilamenten in geeigneter Weise im Verbund miteinander stehen. Insbesondere handelt es sich dabei um flächige, textile Halbzeuge aus der Gruppe der Gewebe, Gelege, Multiaxialgelege, Gesticke, Geflechte, Vliese, Filze, Matten und unidirektionale Faserstränge, vorzugsweise Gewebe oder Gelege auf Basis von Endlosfasern und gegebenenfalls zusätzlich noch Langfasern.

Die für ein textiles Halbzeug bevorzugt einzusetzenden Endlosfasern zeichnen sich durch hohe mechanische Leistungsfähigkeit bei geringem Gewicht aus. Vorzugsweise handelt es sich dabei um technische Fasern, insbesondere um Glas- oder Kohlenstofffasern, wobei Kohlenstofffasern erfindungsgemäß bevorzugt sind.

Erfindungsgemäß bevorzugt einzusetzende Faser-Matrix-Halbzeuge können auch flammwidrig ausgerüstet sein, wie beispielsweise in EP 3 257 893 A1 beschrieben.

Bevorzugte Funktionselemente aus der Spritzgusskomponente sind Befestigungen oder Halterungen und sonstige Applikationen, die nicht durch die Faser-Matrix-Halbzeug-Komponente, sondern aufgrund eventueller geometrischer Komplexität mittels IMF durch die Spritzguss-Komponente abgebildet werden müssen.

Zur Durchführung des IMF wird ein einschichtiges Faser-Matrix-Halbzeug in ein Formwerkzeug, vorzugsweise in ein Spritzgießwerkzeug, mit entsprechend gestaltetem Formhohlraum eingelegt. Anschließend wird die Spritzguss-Komponente eingespritzt. Ziel dabei ist, dass es zwischen dem Matrixpolymer der Faser-Matrix-Halbzeug-Komponente und dem Polymer der Spritzguss-Komponente zu einer stoffschlüssigen Verbindung kommt. Am besten erreicht man eine solche stoffschlüssige Verbindung, indem jene beiden Polymere dieselbe Polymerbasis haben, beispielsweise PA 6 als Matrixpolymer und PA 6 in der Spritzgusskomponente. Dasselbe gilt für PA 66. Erfindungsgemäß bevorzugt ist, wenn beide Komponenten auf den erfindungsgemäßen Zusammensetzungen basieren, wobei auch das IMF von Prozessparametern wie Schmelztemperatur und Druck abhängig ist.

## Beispiele

Zum Nachweis der erfindungsgemäß beschriebenen Verbesserungen der Eigenschaften wurden zunächst durch Compoundierung entsprechende Kunststoff-Zusammensetzungen angefertigt. Die einzelnen Komponenten gemäß **Tab. II** wurden hierzu in einem Zweiwellenextruder (ZSK 26 Compounder der Fa. Coperion Werner & Pfleiderer (Stuttgart, Deutschland)) bei Temperaturen im Bereich von 270 bis 300°C gemischt, als Strang ausgetragen, bis zur Granulierfähigkeit abgekühlt und granuliert, wobei dabei die Kohlenstofffasern mit Hilfe eines Seitenextruders im hinteren (düsennahen) Bereich des Extruders zudosiert wurden. Nach dem Trocknen, in der Regel zwei Tage bei 80°C im Vakuumtrockenschrank, erfolgte die Verarbeitung des Granulats bei Temperaturen im Bereich von 270 bis 290°C zu Normprüfkörpern für die jeweiligen Prüfungen.

Die Flammwidrigkeit der Prüfkörper mit einer Abmessung von 125 mm • 13 mm • 1,5 mm wurde nach der

Methode UL94V (Underwriters Laboratories Inc. Standard of Safety, "Test for Flammability of Plastic Materials for Parts in Devices and Appliances", S. 14 - 18 Northbrook 1998) bestimmt. Das Biegemodul erhielt man gemäß ISO178-A an Prüfkörpern der Abmessung 80 mm • 10 mm • 4 mm.

Die Beurteilung der Oberflächenveränderung erfolgte durch die Bewertung der Farbänderung anhand schwarzer Platten auf Basis der Zusammensetzungen gemäß **Tab.II** und jeweils mit der Abmessung 60 mm • 40 mm • 4 mm vor und nach 14-tägiger Lagerung bei 85°C und 85% Luftfeuchtigkeit nach dem Graumaßstab gemäß ISO105-A02. Die Lagerung erfolgte dabei in einem Konstantklimaschrank des Typs KMF240 der Firma Binder (Tuttlingen, Deutschland), während die Beurteilung der Farbveränderung in einer Lichtkammer des Typs Macbeth Judge II der Firma X-Rite (Grand Rapids, MI, USA) unter der Einstellung "Day" vorgenommen wurde. Entsprechend des Graumaßstabes erfolgte die Bewertung dann in Stufen, wobei die Graustufe 5 bedeutet, dass keine Farbveränderung vorlag und die Graustufe 1 bedeutet, dass eine sehr hohe Abweichung zur ursprünglichen Farbe vorlag. Um eine vergleichsrichtige Beurteilung sicher zu stellen, enthielten alle Zusammensetzungen gemäß der Rezepturen in **Tab.II** 0,3% Ruß (Blackpearls 800 der Firma Cabot, Schaffhausen, Schweiz).

In den Versuchen wurden verwendet:

Komponente A/1: Polyamid 6 (Durethan® B24, Fa. Lanxess Deutschland GmbH, Köln, Deutschland) mit einer nach ISO 307 in 0,5 gew.-%iger Lösung in 96 gew.-%iger Schwefelsäure bei 25 °C gemessenen Viskositätszahl von 107ml/g,

Komponente B/1: Geschnittene Kohlenstofffasern mit einer mittleren Schnittlänge von 6mm (Tenax®-J HT C493 der Firma Toho Tenax, Wuppertal, Deutschland), wobei die Schnittlänge mit einem USB-Mikroskop mit Kalibrierung bestimmt wurde (Dino-Lite Edge Digital Microscope AM7915MZT mit Dino Capture 2.0 Software; Dino-Lite Europe/IDCP B.V., Naarden, Niederlande),

Komponente C/1: Sekundäres Aluminiumphosphonat, ein Aluminiumphosphonat der Formel $Al_2(HPO_3)_3 \cdot (H_2O)_q$ mit q im Bereich von 0 bis 4, hergestellt nach Beispiel 2 der WO 2013/083247 A1**,**

Komponente D/1: Aluminium-tris(diethylphosphinat), [CAS-Nr. 225789-38-8] (Exolit® OP1230 der Fa. Clariant SE, Muttenz, Schweiz),

Komponente E/1: Thermostabilisator Irganox® 1098, Fa. BASF, Ludwigshafen, Deutschland,

Komponente F/1: Schnittglasfaser CS 7928 der Firma Lanxess Deutschland GmbH, Köln, Deutschland [mittlerer Faserdurchmesser 11 µm, mittlere Faserlänge 4,5 mm, E-Glas],

Komponente H/1: Ethylen-bis-stearylamid [CAS Nr. 110-30-5] als Loxiol® EBS von Emery Oleochemicals,

Komponente H/2: Ruß als Blackpearls 800 [CAS Nr. 1333-86-4] der Firma Cabot, Schaffhausen, Schweiz,

Komponente H/3: Talkum [CAS Nr. 14807-96-6] (Mistron R10 der Firma Imerys, Paris, Frankreich),

Für die Vergleichsbeispiele wurden verwendet:

Komponente X1: Melaminpolyphosphat (Melapur 200/70 der Fa. BASF, Ludwigshafen, Deutschland),

Komponente X2: Zinkborat wasserfrei [CAS Nr. 12767-90-7] (Firebrake 500 der Fa. Borax Europe Limited, London, Großbritannien).

**Tab. II**

| Komponente | | Bsp. 1 | Vgl. 1 | Vgl. 2 |
|---|---|---|---|---|
| A/1 | [Massenanteile] | 100 | 100 | 100 |
| B/1 | [Massenanteile] | 44,8 | | 44,8 |
| C/1 | [Massenanteile] | 10,8 | | |
| D/1 | [Massenanteile] | 21,5 | 25,4 | 25,4 |

(fortgesetzt)

| Komponente | | Bsp. 1 | Vgl. 1 | Vgl. 2 |
|---|---|---|---|---|
| E/1 | [Massenanteile] | 0,9 | 0,9 | 0,9 |
| F/1 | [Massenanteile] | | 44,8 | |
| H/1 | [Massenanteile] | 0,5 | 0,5 | 0,5 |
| H/2 | [Massenanteile] | 0,5 | 0,5 | 0,5 |
| H/3 | [Massenanteile] | 0,2 | 0,2 | 0,2 |
| X/1 | [Massenanteile] | | 5,7 | 5,7 |
| X/2 | [Massenanteile] | | 1,1 | 1,1 |
| Biegemodul | [MPa] | > 15000 | 9000 | - |
| UL94 @ 1,5mm | Klasse | V-0 | V-0 | V-1 |
| Farbänderung nach 14d bei 85°C / 85% r.F. | ISO105-A02 | ≥ 4 | <4 | <4 |

Angaben der Komponenten in **Tab. II** in Massenanteile bezogen auf 100 Massenanteile der Komponente A1

Das erfindungsgemäße Beispiel in **Tab. II** zeigt, dass die erfindungsgemäße Kombination mit Komponente B/1 und C/1 zu einer deutlichen Verbesserung des Biegemoduls und der Oberflächenqualität nach Lagerung in feuchtwarmem Klima führte, ohne dass dabei die nach UL94 ermittelte Flammwidrigkeit trotz des Einsatzes von Kohlenstofffasern reduziert wurde. Dies ist insofern überraschend, als gemäß Vgl. 2 eine alleinige Verwendung von Komponente B/1 ohne C/1 hinsichtlich der Farbänderung nach feuchtwarmer Lagerung keine gleichwertige Oberflächenqualität aufwies und als gemäß Vgl. 2 mit einem Flammschutzmittelsystem nach dem Stand der Technik enthaltend nur Komponente D/1, X/1 und X/2 trotz gleicher Gesamtkonzentration des Flammschutzsystems bei Verwendung von Komponente B/1 keine V-0 Klassifizierung mehr erreicht werden konnte, während dies bei Verwendung von Glasfasern anstatt Kohlenstofffasern (Vgl. 1) möglich ist.

## Patentansprüche

1. Zusammensetzungen enthaltend

A) Polyamid 6 und/oder Polyamid 66, jeweils mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,
B) Kohlenstofffasern,
C) mindestens ein Aluminiumsalz der Phosphonsäure,
D) ein oder mehrere organische Phosphinsäuresalze der Formel (I) und/oder ein oder mehrere Diphosphinsäuresalze der Formel (II) und/oder deren Polymere,

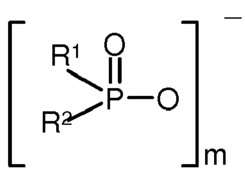 $M^{m+}$ (I) 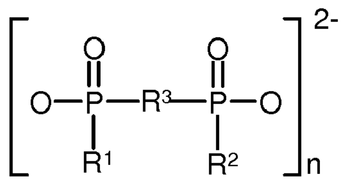 $M_x^{m+}$ (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_6$- Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl von 1 bis 4 steht;
n für eine ganze Zahl von 1 bis 3 steht,

x für 1 und 2 steht,

wobei n, x und m in Formel (II) gleichzeitig nur solche ganzen Zahlen annehmen können, dass das Diphosphinsäuresalz der Formel (II) als Ganzes ungeladen ist.

**2.** Zusammensetzungen gemäß Anspruch 1, **dadurch gekennzeichnet, dass** auf 100 Massenanteile Komponente A) 2 bis 120 Massenanteile der Komponente B), 3 bis 30 Massenanteile der Komponente C) und 8 bis 80 Massenanteile der Komponente D) eingesetzt werden.

**3.** Zusammensetzungen gemäß Anspruch 1 oder 2, **dadurch gekennzeichnet, dass** zusätzlich zu den Komponenten A), B), C) und D) noch E) wenigstens ein Thermostabilisator aus der Gruppe der sterisch gehinderten Phenole, vorzugsweise zu 0,02 bis 4 Massenanteilen bezogen auf 100 Massenanteile der Komponente A), eingesetzt wird.

**4.** Zusammensetzungen gemäß Anspruch 3, **dadurch gekennzeichnet, dass** zusätzlich zu den Komponenten A) bis E) oder anstelle von E) noch F) Glasfasern, vorzugsweise zu 10 bis 150 Massenanteilen bezogen auf 100 Massenanteile der Komponente A), eingesetzt werden.

**5.** Zusammensetzungen gemäß einem der Ansprüche 3 oder 4, **dadurch gekennzeichnet, dass** zusätzlich zu den Komponenten A) bis F) oder anstelle von E) und/oder F) noch G) wenigstens ein von den Komponenten B) und F) verschiedener Füllstoff oder Verstärkungsstoff, vorzugsweise zu 1 bis 150 Massenanteilen bezogen auf 100 Massenanteile der Komponente A), eingesetzt wird.

**6.** Zusammensetzungen gemäß einem der Ansprüche 3 bis 5, **dadurch gekennzeichnet, dass** zusätzlich zu den Komponenten A) bis G) oder anstelle von E) und/oder F) und/oder G) noch H) wenigstens eine weiteres von den Komponenten B) bis G) unterschiedliches Additiv, vorzugsweise zu 0,01 bis 80 Massenanteile bezogen auf 100 Massenanteile der Komponente A), eingesetzt wird.

**7.** Zusammensetzungen gemäß Anspruch 7, **dadurch gekennzeichnet, dass** als Komponente H) teilaromatische Polyamide und/oder Polyalkylenterephthalate eingesetzt werden, vorzugsweise zu 1 bis 50 Massenanteilen bezogen auf 100 Massenanteile der Komponente A).

**8.** Zusammensetzungen gemäß Anspruch 1, **dadurch gekennzeichnet, dass** diese

A) Polyamid 6 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,
B) Kohlenstofffasern, vorzugsweise mit einer mittleren Länge im Bereich von 4 bis 7mm,
C) Aluminiumphosphonat der Formel $Al_2(HPO_3)_3 \cdot (H_2O)_q$ mit q im Bereich von 0 bis 4, und
D) Aluminium-tris(diethylphosphinat),

enthalten, wobei zur Längenbestimmung der Komponente B) ein USB-Mikroskop mit Kalibrierung verwendet wird.

**9.** Zusammensetzungen gemäß Anspruch 1, **dadurch gekennzeichnet, dass** diese

A) Polyamid 66 mit einer nach ISO 307 in 0,5 gew.-%iger Lösung in 96 gew.-%iger Schwefelsäure bei 25 °C zu bestimmenden Viskositätszahl im Bereich von 80 bis 180 ml/g,
B) Kohlenstofffasern, vorzugsweise mit einer mittleren Länge im Bereich von 4 bis 7mm,
C) Aluminiumphosphonat der Formel $Al_2(HPO_3)_3 \cdot (H_2O)_q$ mit q im Bereich von 0 bis 4, und
D) Aluminium-tris(diethylphosphinat),

enthalten, wobei zur Längenbestimmung der Komponente B) ein USB-Mikroskop mit Kalibrierung verwendet wird.

**10.** Zusammensetzungen gemäß Anspruch 8 oder 9, **dadurch gekennzeichnet, dass** diese zusätzlich

E) wenigstens einen Thermostabilisator aus der Gruppe

2,2'-Methylen-bis-(4-methyl-6-tert.-butylphenol),
1,6-Hexandiol-bis-(3,5-di-tert.-butyl-4-hydroxyphenyl]-propionat Pentaerythrityl-tetrakis-[3-(3,5-di-tert.-butyl-4-hydroxyphenyl)-propionat],

N,N'-Hexamethylen-bis-3,5-di-tert.-butyl-4-hydroxyhydrocinnamid und
Triethylene glycol bis(3-tert-butyl-4-hydroxy-5-methylphenyl)propionate enthalten.,

**11.** Zusammensetzungen gemäß einem der Ansprüche 3 bis 10, **dadurch gekennzeichnet, dass** diese als Komponente E) N,N'-Hexamethylen-bis-3,5-di-tert.-butyl-4-hydroxyhydrocinnamid enthalten.

**12.** Erzeugnisse, vorzugsweise Batteriesystemkomponenten, basierend auf Zusammensetzungen gemäß einem der Ansprüche 1 bis 11.

**13.** Batteriesystemkomponenten gemäß Anspruch 12, **dadurch gekennzeichnet, dass** es sich dabei um Strukturbauteile zur Einfassung, Befestigung und Aufhängung eines Batteriesystems und/oder um einzelne Komponenten eines Batteriesystems, vorzugsweise Zellmodule, Kühlvorrichtungen und/oder der Batteriemanagementsysteme, handelt.

**14.** Verfahren zur Herstellung von Erzeugnissen, bevorzugt von Erzeugnissen für den Einsatz im elektrischen Antriebsstrang und/oder Batteriesystem von Fahrzeugen mit elektrischen Antrieb, insbesondere Hybrid- oder Elektrofahrzeuge, **dadurch gekennzeichnet, dass** man Zusammensetzungen gemäß einem der Ansprüche 1 bis 11 im Spritzguss einschließlich der Sonderverfahren Gasinjektionstechnik, Wasserinjektionstechnik und Projektilinjektionstechnik, in Extrusionsverfahren, einschließlich in der Profil-Extrusion, oder beim Blasformen, einsetzt.

**15.** Verwendung der Zusammensetzungen gemäß einem der Ansprüche 1 bis 11 als Formmassen im Spritzguss, einschließlich der Sonderverfahren Gasinjektionstechnik, Wasserinjektionstechnik und Projektilinjektionstechnik, in Extrusionsverfahren, einschließlich in der Profil-Extrusion, im Blasformen, zur Herstellung von Erzeugnissen, vorzugsweise von Erzeugnissen für den Einsatz im elektrischen Antriebsstrang und/oder Batteriesystem von Fahrzeugen mit elektrischen Antrieb.

Europäisches Patentamt
European Patent Office
Office européen des brevets

# EUROPÄISCHER RECHERCHENBERICHT

Nummer der Anmeldung
EP 18 16 3857

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | EP 3 034 553 A1 (LANXESS DEUTSCHLAND GMBH [DE]) 22. Juni 2016 (2016-06-22)<br>* Seite 12, Zeile 8; Anspruch 5; Beispiel 1; Tabelle 2 *<br>----- | 1-15 | INV.<br>C08K5/5313<br>C08K5/5317<br>C08K7/06 |
| Y,D | WO 2013/083247 A1 (CLARIANT INT LTD [CH]) 13. Juni 2013 (2013-06-13)<br>* Beispiele 12, 14, 16, 18, 20 *<br>----- | 1-15 | |
| Y | US 2007/173573 A1 (URATA YOSHIHIRO [JP] ET AL) 26. Juli 2007 (2007-07-26)<br>* Beispiele 1,4; Tabelle 1 *<br>----- | 1-15 | |

RECHERCHIERTE SACHGEBIETE (IPC)
C08K

Der vorliegende Recherchenbericht wurde für alle Patentansprüche erstellt

1

| Recherchenort | Abschlußdatum der Recherche | Prüfer |
|---|---|---|
| München | 17. September 2018 | Lohner, Pierre |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 16 3857

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-09-2018

| Im Recherchenbericht angeführtes Patentdokument | Datum der Veröffentlichung | Mitglied(er) der Patentfamilie | Datum der Veröffentlichung |
|---|---|---|---|
| EP 3034553 A1 | 22-06-2016 | CN 105713383 A | 29-06-2016 |
| | | EP 3034553 A1 | 22-06-2016 |
| | | EP 3034554 A1 | 22-06-2016 |
| | | JP 2016117898 A | 30-06-2016 |
| | | JP 2017106038 A | 15-06-2017 |
| | | KR 20160075347 A | 29-06-2016 |
| | | US 2016177060 A1 | 23-06-2016 |
| WO 2013083247 A1 | 13-06-2013 | CN 104364305 A | 18-02-2015 |
| | | DE 102011120200 A1 | 06-06-2013 |
| | | EP 2788416 A1 | 15-10-2014 |
| | | HK 1202568 A1 | 02-10-2015 |
| | | JP 6316752 B2 | 25-04-2018 |
| | | JP 2015504926 A | 16-02-2015 |
| | | KR 20140105814 A | 02-09-2014 |
| | | SG 11201402871Q A | 28-08-2014 |
| | | TW 201335345 A | 01-09-2013 |
| | | US 2014336325 A1 | 13-11-2014 |
| | | WO 2013083247 A1 | 13-06-2013 |
| US 2007173573 A1 | 26-07-2007 | CN 1950456 A | 18-04-2007 |
| | | EP 1741754 A1 | 10-01-2007 |
| | | US 2007173573 A1 | 26-07-2007 |
| | | WO 2005105924 A1 | 10-11-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0792912 A2
- WO 2006029711 A1
- EP 3034553 A1
- DE 102011084519 A1
- EP 2788542 B1
- WO 2013083247 A1
- WO 9739053 A
- US 4360617 A
- EP 1713848 B1
- US 3644574 A
- GB 1409275 A
- US 4937285 A
- US 4859740 A
- US 4861831 A
- US 4806593 A
- US 4812515 A
- DE 4236122 A
- WO 2009003976 A1
- DE 4101106 A1
- US 6036908 B
- US 6475423 B1
- WO 2005070647 A1
- EP 3257893 A1


### In der Beschreibung aufgeführte Nicht-Patentliteratur


- Technische Thermoplaste; 4. Polyamide. Kunststoff-Handbuch. Hanser, 1998, vol. 3, 106
- **C.JAROSCHEK.** *Zeitschrift Kunststofftechnik 8,* 2012, vol. 5, 516-524
- *CHEMICAL ABSTRACTS,* 25038-54-4
- *CHEMICAL ABSTRACTS,* 32131-17-2
- **H. DOMININGHAUS.** Die Kunststoffe und ihre Eigenschaften. VDI-Verlag, 1976, 272 ff
- **HANS DOMININGHAUS.** Die Kunststoffe und ihre Eigenschaften. 1998, 14
- *CHEMICAL ABSTRACTS,* 13598-36-2
- **A. F. HOLLEMAN ; E. WIBERG.** Lehrbuch der Anorganischen Chemie. Walter de Gruyter, 1995, 764
- *CHEMICAL ABSTRACTS,* 71449-76-8
- *CHEMICAL ABSTRACTS,* 156024-71-4
- *CHEMICAL ABSTRACTS,* 225789-38-8
- *CHEMICAL ABSTRACTS,* 36443-68-2
- *CHEMICAL ABSTRACTS,* 35074-77-2
- *CHEMICAL ABSTRACTS,* 23128-74-7
- Chemie Ingenieur Technik (72). Wiley-VCH Verlags GmbH, 2000, vol. 3, 273-276
- **CHRIS DEARMITT.** Additives Feature, Mineral Fillers. *COMPOUNDING WORLD,* Februar 2011, 28-38
- *CHEMICAL ABSTRACTS,* 26984-27-0
- **ULLMANN.** Enzyklopädie der Technischen Chemie. 1980, vol. 19, 277-295
- *CHEMICAL ABSTRACTS,* 1078142-02-5
- *CHEMICAL ABSTRACTS,* 1592-23-0
- *CHEMICAL ABSTRACTS,* 110-30-5
- *CHEMICAL ABSTRACTS,* 25668-34-2
- *CHEMICAL ABSTRACTS,* 24938-70-3
- *CHEMICAL ABSTRACTS,* 124-09-4
- Polyamide. Technische Thermoplaste. Carl Hanser Verlag, 1998, vol. 4, 311-314
- **K. BRAST.** Verarbeitung von Langfaser-verstärkten Thermoplasten im direkten Plastifizier-/Pressverfahren. *Rheinisch-Westfälische Technische Hochschule Aachen,* 2001, 30-33
- Test for Flammability of Plastic Materials for Parts in Devices and Appliances. Underwriters Laboratories Inc. Standard of Safety, 1998, 14-18
- *CHEMICAL ABSTRACTS,* 1333-86-4
- *CHEMICAL ABSTRACTS,* 14807-96-6
- *CHEMICAL ABSTRACTS,* 12767-90-7